# EUROPÄISCHE PATENTANMELDUNG

(11) **EP 4 800 893 A1**
(43) Veröffentlichungstag der Anmeldung: **02.09.2026**
(21) Anmeldenummer: 26159163.0
(22) Anmeldetag: 17.02.2026
(51) Int. Cl.: H02K 7/06, H02K 7/00, H02K 7/18, B60B 7/04

(54) **ELEKTROMECHANISCHES SYSTEM ZUR ANORDNUNG IN DER RADNABE EINES FAHRZEUGS**

(30) Priorität: 28.02.2025 DE 102025107775
(71) Anmelder: LUPA-Electronics GmbH, 17379 Lübs (DE)
(72) Erfinder: Dr. Weyrich, Norman, 93359 Wildenberg (DE); Ihlenburg, Jörn, 10117 Berlin (DE); May, Benjamin, 17379 Lübs (DE); Stöckler, Martin, 44141 Dortmund (DE)
(74) Vertreter: Kohler Schmid Möbus Patentanwälte

(57) **Zusammenfassung**

Die Erfindung betrifft ein elektromechanisches System (1), zur ortsfesten Anordnung in einem zentralen Hohlraum (43a) einer Radnabe (43) eines Fahrzeugs (61),
wobei das elektromechanische System (1) umfasst
- einen Generator (11) zur Erzeugung von elektrischem Strom,
- einen elektrischen Motor (23) zur Betätigung eines Aktuators (2),
- den Aktuator (2), und
- ein Speichersystem (20) zur Speicherung von elektrischer Energie,

ist dadurch gekennzeichnet,
dass der Aktuator (2) entlang einer Längsachse (LA) des elektromechanischen Systems (1) linear verfahrbar ist,
dass eine Kopplungseinrichtung (24) den Motor (23) an einen radial inneren Teil (2b) des Aktuators (2) koppelt,
dass das Speichersystem (20) mehrere Speicherelemente (21) aufweist, welche radial außen um die Längsachse (LA) und um den Motor (23) herum angeordnet sind und zumindest teilweise in einer Umfangsrichtung (UR) voneinander beabstandet sind,
und dass ein radial äußerer Teil (2a) des Aktuators (2) radial jenseits der Speicherelemente (21) ausgebildet ist,
wobei Verbindungselemente (2c) des Aktuators (2) den radial inneren Teil (2b) und den radial äußeren Teil (2a) miteinander starr verbinden und zwischen den Speicherelementen (21) hindurchgreifen. Mit dem elektromechanischen System ist auf kompaktem Raum eine hohe Betriebsbereitschaft erreichbar.

## Beschreibung

Die Erfindung betrifft ein elektromechanisches System, zur ortsfesten Anordnung in einem zentralen Hohlraum einer Radnabe eines Fahrzeugs,
wobei das elektromechanische System umfasst
   - einen Generator zur Erzeugung von elektrischem Strom,
   - einen elektrischen Motor zur Betätigung eines Aktuators,
   - den Aktuator, und
ein Speichersystem zur Speicherung von elektrischer Energie.

Ein solches elektromechanisches System ist bekannt geworden durch die EP 3 530 482 A1.

Viele Typen von Fahrzeugen weisen Räder auf, mit denen sie auf dem Untergrund abrollen und dadurch auf dem Untergrund verfahren können. Für zahlreiche Anwendungen ist es vorteilhaft oder erwünscht, auf den sich gegenüber dem Fahrzeug drehenden Rädern Funktionen, beispielsweise Überwachungsfunktionen, einzurichten, welche elektrische Energie benötigen. Beispielsweise ist es oft erwünscht, Informationen über die momentane Umdrehungsgeschwindigkeit des Rades zu erhalten, was mit auf dem Rad angeordneten elektrischen Sensoren erfolgen kann.

Die Übertragung von elektrischem Strom vom Fahrzeug auf die sich drehenden Räder ist jedoch schwierig, insbesondere bei hohen Umdrehungsgeschwindigkeiten des Rades. Zwar sind Schleifkontakte möglich, jedoch verschleißen diese leicht, und die Unterbringung der Schleifkontakte und zugehörigen Leitungen am Fahrzeug ist sehr aufwändig. Speziell für Sensoren auf Rädern ist es daher bekannt geworden, diese mit einer Batterie mit elektrischer Energie zu versorgen, welche zusammen mit dem Sensor auf dem Rad angebracht wird. Die Batterie wird bei Erschöpfung getauscht, typischerweise im Rahmen von Wartungsarbeiten in einer Werkstatt. Batterien zur elektrischen Energieversorgung auf einem drehenden Fahrzeugrad und ein Austausch der Batterien bei Erschöpfung bieten sich vor allem dann an, wenn der Energieverbrauch der Anwendung eher gering ist, so dass ein Austausch nur selten (z.B. alle paar Jahre) nötig wird.

In manchen Anwendungsfällen ist es erwünscht, Bauteile am sich drehenden Rad während der Fahrt zu bewegen. Hierfür wird typischerweise ein elektrischer Motor und ein vom Motor angetriebener Aktuator eingesetzt.

Beispielsweise ist es bekannt geworden, über der Felge eines Fahrzeugrads eine Felgenabdeckung vorzusehen. Bei geschlossener Felgenabdeckung wird ein besonders geringer Strömungswiderstand des Fahrzeugrades erreicht. Allerdings verdeckt die geschlossene Felgenabdeckung auch Öffnungen in der Felge, durch die kühlende Luft zu den Bremsen des Fahrzeugs an der Radnabe des Fahrzeugrads gelangen kann. Falls die Bremse zu heiß würde (etwa bei einer Bergabfahrt) kann dann mit einem von einem Motor angetriebenen Aktuator die Felgenabdeckung geöffnet werden, um mehr kühlende Luft an die Bremse gelangen zu lassen.

Aus der EP 3 530 482 A1 ist es bekannt geworden, ein Fahrzeugrad mit einem elektromechanischen System zu versehen, welches in die Nabe des Fahrzeugrades eingebaut wird. Es umfasst eine aufladbare Batterie, einen Generator mit einem exzentrischen Gewichtsteil und eine Schaltplatine. Als zu versorgende elektrische Verbraucher werden ein Motor zur Betätigung von Abdeckungen genannt, mit denen Zwischenräume von Radialrippen eines Leichtmetallrads geschlossen werden können, oder auch Sensoren zur Messung der Umdrehungsgeschwindigkeit oder der Temperatur. Die Batterie ist als Knopfzelle ausgebildet und ist am vorderen, in die Nabe hineinragende Ende des elektromechanischen Systems angeordnet.

Mit diesem bekannten elektromechanischen System kann eine autarke, vom Fahrzeug unabhängige Energieversorgung eingerichtet werden, mit dem auch die Felgenabdeckung eines Fahrzeugrads motorisch betätigt werden kann. Allerdings werden keine näheren Angaben über die Anordnung des Motors gemacht.

Ein elektromechanisches System im zentralen Hohlraum einer Radnabe muss auf kleinem Raum eine erhebliche Zahl von Bauteilen unterbringen, und soll dabei eine hohe Betriebsbereitschaft sicherstellen.

Das elektromechanische System ist im zentralen Hohlraum der Radnabe nah an den Bremsen des Fahrzeugs angeordnet. Ein Ausfall des elektromechanischen Systems kann insbesondere dadurch verursacht werden, dass die Bremsen des Fahrzeugs nach längeren Bremsmanövern heiß werden, und diese Hitze bis zum elektromechanischen System vordringt.

### Aufgabe der Erfindung

Es ist Aufgabe der Erfindung, ein elektromechanisches System der eingangs genannten Art vorzustellen, mit welchem auf kompaktem Raum eine hohe Betriebsbereitschaft erreichbar ist.

### Beschreibung der Erfindung

Diese Aufgabe wird erfindungsgemäß gelöst durch ein elektromechanisches System der eingangs genannten Art, das dadurch gekennzeichnet ist,
dass der Aktuator entlang einer Längsachse des elektromechanischen Systems linear verfahrbar ist,
dass eine Kopplungseinrichtung den Motor an einen radial inneren Teil des Aktuators koppelt,
dass das Speichersystem mehrere Speicherelemente aufweist, welche radial außen um die Längsachse und um den Motor herum angeordnet sind und zumindest teilweise in einer Umfangsrichtung voneinander beabstandet sind,
und dass ein radial äußerer Teil des Aktuators radial jenseits der Speicherelemente ausgebildet ist,
wobei Verbindungselemente des Aktuators den radial inneren Teil und den radial äußeren Teil miteinander starr verbinden und zwischen den Speicherelementen hindurchgreifen.

Die Erfindung sieht vor, den Motor des elektromechanischen Systems in einem (bezüglich der Längsachse des elektromechanischen Systems) radial inneren, achsnahen Bereich anzuordnen. Um den Motor herum sind die Speicherelemente des wiederaufladbaren Speichersystems für elektrische Energie angeordnet; die einzelnen Speicherelemente können beispielsweise aufladbare Batterien oder Kondensatoren sein.

Durch diese Anordnung wirkt von radial außen kommende Wärme (die typischerweise von einer das elektromechanische System radial umgebenden Wand der Radnabe ausgeht) zunächst auf die radial weiter außen gelegenen Speicherelemente ein. Die Speicherelemente können von radial außen kommende Wärmestrahlung abschirmen und auch von radial außen kommende Wärmeenergie aufnehmen und speichern, so dass diese Wärmeenergie vom Motor ferngehalten wird.

Nach der Beobachtung der Erfinder können typische Speicherelemente wie Batterien oder Kondensatoren eine höhere Temperatur viel besser verkraften als ein elektrischer Motor. Insbesondere können die Speicherelemente auch bei höheren Temperaturen noch betriebsbereit bleiben, im Gegensatz zu einem Motor, der bei höheren Temperaturen nicht mehr zuverlässig funktioniert oder gar abgeschaltet werden muss, um Beschädigungen zu vermeiden. Im Falle von chemisch wirkenden Speicherelementen (wie Batterien) kann eine erhöhte Temperatur sogar die Leistungsfähigkeit ein wenig verbessern.

Durch die erfindungsgemäße Anordnung der Speicherelemente radial außen, jenseits des Motors und um den Motor herum kann somit bei Erwärmung des elektromechanischen Systems von radial außen eine hohe (lange) Betriebsbereitschaft aufrecht erhalten.

Um trotz der Anordnung der Speicherelemente um den Motor herum noch den Aktuator radial außen am elektromechanischen System nutzen zu können, ist der Aktuator mit einem radial inneren Teil und einem radial äußeren Teil aufgebaut. Mit dem radial inneren Teil ist eine mechanische Kopplung an den radial innen angeordneten Motor leicht möglich. Mit den erfindungsgemäßen Verbindungselementen, die nach außen zum radial äußeren Teil des Aktuators ausgreifen, kann die Bewegung des inneren Teils auf den äußeren Teil des Aktuators übertragen werden. Die Verbindungselemente greifen dabei durch (azimutale) Lücken zwischen den Speicherelementen hindurch. Die Lücken sind in axialer Richtung ausreichend ausgedehnt, so dass die Verbindungselemente in allen gewünschten Verfahrpositionen des Aktuators genügend Raum haben. Typischerweise sind die Speicherelemente zu diesem Zweck parallel zur Längsachse ausgerichtet.

Typischerweise wird mit dem Aktuator eine (einteilige oder mehrteilige) Felgenabdeckung des Rades betätigt. Die Felgenabdeckung ist dafür an den äußeren Teil des Aktuators mechanisch gekoppelt; dies kann beispielsweise eine starre Kopplung sein (typischerweise für eine einteilige Felgenabdeckung), oder auch eine Schwenkkopplung (typischerweise für eine mehrteilige Felgenabdeckung). Die Kopplung zwischen äußerem Teil des Aktuators und der Felgenabdeckung kann insbesondere über radial nach außen vorstehende Laschen am äußeren Teil des Aktuators erfolgen.

Das elektromechanische System weist zudem typischerweise ein oder mehrere Sensoren auf, mit denen der derzeitige Zustand des Fahrzeugrades überwacht werden kann. Die Daten der Sensoren werden typischerweise drahtlos an ein elektronisches System des Fahrzeugs übergeben, gegebenenfalls nach einer Vorverarbeitung in einer Auswerteeinrichtung im elektromechanischen System. Die Sensoren sind typischerweise auf einer Hauptplatine des elektromechanischen Systems angeordnet.

Die Längsachse entspricht einer Rotationsachse der Radnabe im montierten Zustand des elektromechanischen Systems.

Das elektromechanische System steckt im montierten Zustand mit seinem vorderen Ende in dem zentralen Hohlraum der Radnabe; das hintere Ende des elektromechanischen Systems ragt typischerweise ein wenig aus dem Hohlraum heraus. Das elektromechanische System ist ortsfest in der Radnabe angeordnet (d.h. es dreht sich mit der Radnabe mit). Dafür ist das elektromechanische System in geeigneter Weise bevorzugt an der Radnabe des Fahrzeugs und/oder am Fahrzeugrad befestigt. Typischerweise ist das elektromechanische System unmittelbar an der Radnabe befestigt, beispielsweise durch Verschrauben eines Gehäuses des elektromechanischen Systems mit der Radnabe. Das elektromechanische System kann auch als eine elektromechanische Nabenkappe bezeichnet werden.

Das elektromechanische System kann mit normalen Rädern, ohne aufwändige Änderung der Räder eingesetzt werden. Bevorzugt wird dafür das elektromechanische System an der fahrzeugseitigen Radnabe befestigt. Über den Generator und das Speichersystem ist das elektromechanische System energetisch autark. Der Generator liefert (abhängig vom Betriebszustand) elektrische Energie sowohl direkt an die Verbraucher des elektromechanischen Systems (z.B. den Motor des Aktuators und Schaltkreise zur Steuerung des Systems), als auch an das Speichersystem (für eine spätere Nutzung durch die Verbraucher). Das elektromechanische System benötigt keine Kabelverbindung zum Fahrzeug, weder für eine Energieversorgung noch für einen Datenaustausch; für einen Datenaustausch kann eine drahtlose Kommunikation mit der Energie aus dem Generator und dem Speichersystem betrieben werden. Je nach Betriebszustand lädt der Generator das Speichersystem auf und/oder versorgt die Verbraucher des elektromechanischen Systems, insbesondere den Motor, elektronische Schaltungen und Auswerteeinrichtungen, Sensoren und Kommunikationseinrichtungen. Falls der Generator im Betrieb abgeschaltet werden muss, z.B. Weil die Temperatur am Generator zu hoch wird, können die anderen Verbraucher oder ein ausgewählter Teil davon weiter mit elektrischer Energie aus dem Speichersystems versorgt werden.

Das elektromechanische System kann zusammenfassend insgesamt widerstandsfähig gegen Umwelteinflüsse, vor allem Wärmeeinstrahlung von den Bremsen, ausgebildet werden. Das System kann auf kompaktem Raum und gegen Vibrationen und äußeren Schocks widerstandsfähig eingerichtet werden. Das System kann an der Radnabe des Fahrzeugs befestigt werden, so dass für eine Installation an Fahrzeugrädern keine Veränderung vorgenommen werden muss. Durch Anordnung auf der Radnabe bzw. auf der Rotationsachse der Radnabe werden Zentrifugalkräfte auf das elektromechanische System minimiert. Die einzelnen mechanischen und elektrischen Komponenten des elektromechanischen Systems, (mit Ausnahme eines Unwuchtbauteils des Generators), werden bevorzugt symmetrisch zur Rotationsachse des Rades angeordnet, wodurch die Unwucht des elektromechanischen Systems (und des Fahrzeugrades insgesamt) minimiert werden kann.

Ein Fahrzeug, auf welchem die Erfindung eingesetzt werden kann, ist beispielsweise ein Auto (insbesondere ein Personenkraftwagen), ein Transportfahrzeug (insbesondere ein Lastkraftwagen), ein Baufahrzeug (insbesondere ein Bagger oder Radlader), ein Militärfahrzeug oder ein Schienenfahrzeug.

### Bevorzugte Ausführungsformen der Erfindung

Bei einer bevorzugten Ausführungsform des erfindungsgemäßen elektromechanischen Systems ist vorgesehen,
dass die Kopplungseinrichtung eine Spindel umfasst, welche um die Längsachse drehbar gelagert ist und welche vom Motor antreibbar ist,
dass die Spindel ein Außengewinde aufweist,
dass der Aktuator an seinem radial inneren Teil ein Innengewinde aufweist, welches auf das Außengewinde der Spindel aufgeschraubt ist,
und dass der Aktuator drehfest bezüglich der Längsachse gelagert ist. Über die Spindel kann auf einfache Weise eine Drehbewegung einer Motorwelle des Motors (oder einer Getriebewelle eines zwischengeschalteten Getriebes) in eine lineare Verfahrbewegung des Aktuators umgewandelt werden. Die Spindel kann insbesondere becherförmig ausgebildet sein und ein Getriebe und/oder den Motor radial umgreifen.

Bevorzugt ist eine Weiterbildung dieser Ausführungsform, bei der die Kopplungseinrichtung ein Getriebe umfasst, welches eine Drehung einer Welle des Motors untersetzend auf die Spindel überträgt. Dadurch kann eine genauere Positionierung des Aktuators (oder auch einer Felgenabdeckung) erfolgen, und der Motor benötigt weniger Kraft zur Betätigung des Aktuators. Die Spindel kann insbesondere becherförmig ausgebildet sein und radial um das Getriebe herum angeordnet sein.

Bevorzugt ist eine Ausführungsform, bei der am radial äußeren Teil des Aktuators eine Felgenabdeckung für ein an der Radnabe montiertes Fahrzeugrad angekoppelt ist. Dadurch kann die Felgenabdeckung zwischen einem geschlossen Zustand (mit geringem Strömungswiderstand des Rades) und einem geöffneten Zustand (mit besserer Belüftung und damit besserer Kühlung des Fahrzeugrades, der Radnabe, der Bremsen am Fahrzeugrad und/oder des elektromechanischen Systems) gewechselt werden. Auch Zwischenstellungen (mit mittlerer Kühlung und mittlerem Luftwiderstand, je nach Stellung) sind im Rahmen der Ausführungsform möglich. Die Betätigung der Felgenabdeckung mit dem erfindungsgemäßen elektromechanischen System ist besonders zuverlässig.

Eine vorteilhafte Ausführungsform sieht vor,
dass das elektromechanische System ein vorderes Ende aufweist, mit welchem voraus das elektromechanische System in den Hohlraum der Radnabe einführbar ist, und ein entlang der Längsachse gegenüberliegendes, hinteres Ende aufweist, und dass entlang der Längsachse vom vorderen Ende zum hinteren Ende eine Abfolge von Komponenten des elektromechanischen Systems eingerichtet ist, wie folgt:
Generator, Kopplungseinrichtung, Motor. Das vordere Ende wird typischerweise durch die Bremsen des Fahrzeugrades stärker erwärmt als das hintere Ende. Entsprechend ist der Motor durch den Generator und die Kopplungseinrichtung vor dem Wärmeeintrag vom vorderen Ende her geschützt. Wenn bei einer Erwärmung des vorderen Endes der Generator deaktiviert werden muss, beeinträchtigt das die Betriebsbereitschaft des Motors und des Aktuators zunächst nicht, da elektrische Energie weiterhin aus dem Speichersystem zur Verfügung steht. Bei Fahrzeugstillstand ist der Generator automatisch deaktiviert; dies ist vorteilhaft, da typischerweise im Fahrzeugstillstand unmittelbar nach starker Benutzung der Bremsen die höchsten Temperaturen auftreten. Das Getriebe, welches als nächstes nach dem Generator erwärmt wird, ist vergleichsweise unempfindlich gegenüber Erwärmung. Am weitesten weg vom vorderen Ende, und damit im kühlsten Bereich, ist bei den gelisteten Komponenten der Motor angeordnet, der für die Betätigung der Felgenklappen eine hohe Betriebsbereitschaft haben sollte.

Vorteilhaft ist auch eine Weiterbildung dieser Ausführungsform, die vorsieht, dass das elektromechanische System zudem auch eine Zwischenplatine und eine Hauptplatine aufweist,
und dass entlang der Längsachse vom vorderen Ende zum hinteren Ende die Abfolge der Komponenten des elektromechanischen Systems eingerichtet ist, wie folgt:
Generator, Zwischenplatine, Kopplungseinrichtung, Motor, Hauptplatine. Die Zwischenplatine, die vor allem der elektrischen Verbindung dient, ist vergleichsweise unempfindlich gegen Erwärmung und kann daher nahe dem vorderen Ende platziert werden. Die Hauptplatine, auf der typischerweise viele für hohe Temperaturen empfindliche elektronische Bauteile (z.B. Prozessoren, Sensoren) sitzen, ist nahe dem hinteren Ende angeordnet, welches am kältesten bleibt. Die Speicherelemente befinden sich axial im Bereich des Motors und meist auch im Bereich der Kopplungseinrichtung; die Hauptplatine wird daher typischerweise zumindest teilweise axial durch die Speicherelemente abgeschirmt. Damit ist eine hohe (lange) Betriebsbereitschaft, auch bei Erwärmung vom vorderen Ende her, sichergestellt. Eine nahe dem hinteren Ende angeordnete Hauptplatine verbessert auch die Übertragungsleistung einer ersten Kommunikationseinheit und/oder einer zweiten Kommunikationseinheit (siehe unten) auf der Hauptplatine.

Bei einer vorteilhaften Ausführungsform sind der Generator und der Motor baugleich ausgebildet. Dies spart Kosten bei der Herstellung des elektromechanischen Systems (Skaleneffekt), und verringert die Anzahl der benötigten unterschiedlichen Bauteile, was die Logistik vereinfacht.

Besonders bevorzugt ist eine Ausführungsform, bei der das elektromechanische System ein Sensorsystem umfasst, wobei das Sensorsystem eingerichtet ist zur Messung
- von linearen Bewegungen des elektromechanischen Systems bezüglich zumindest einer ersten lokalen Bewegungsachse und einer zweiten lokalen Bewegungsachse, welche linear unabhängig sind,
- als auch von Winkelbewegungen des elektromechanischen Systems bezüglich zumindest einer ersten lokalen Drehachse und einer zweiten lokalen Drehachse, die linear unabhängig voneinander sind.

Mittels des Sensorsystems kann eine Messung von Position, Orientierung und Bewegung im Raum des zugehörigen Fahrzeugrades während der Fahrt erfolgen. Damit können zahlreiche Information gewonnen werden (ggf. auch zusammen mit weiteren elektromechanischen Systemen an weiteren Fahrzeugrädern des Fahrzeugs), die für den Fahrbetrieb des Fahrzeugs von Interesse sind. Diese Informationen können beispielsweise für die Einstellung von Fahrzeugeigenschaften und/oder bei der Steuerung des Fahrzeugs verwendet werden, beispielsweise in einem Elektronischen Stabilitätsprogramm (ESP), einem Antiblockiersystem oder einer adaptiven Fahrwerkssteuerung.

Insbesondere kann eine vertikale Radbewegung bestimmt werden. Es kann auf die Fahrbahnstruktur (Asphalt, Beton, Schotter, unbefestigt...), den Fahrbahnzustand (Glätte, Nässe, ...) und/oder die Reifenhaftung geschlossen werden. Zudem kann die Drehzahl des Rades bestimmt werden ("horizontale Radbewegung"). Zudem kann mit dem Sensorsystem eine Vibration des Rades bestimmt werden. Alternativ oder zusätzlich kann jedoch auch eine separate Vibrationssensoreinrichtung für eine Vibrationsbestimmung vorgesehen sein. Zudem können weitere Sensoren am elektromechanischen System vorgesehen sein, typischerweise auf der Hauptplatine.

Das Sensorsystem misst zumindest zwei lineare Bewegungen und zwei Drehbewegungen, und erzeugt entsprechend eine 4D-Bewegungsinformation.

Das Sensorsystem bewegt sich zusammen mit dem elektromechanischen System, also zusammen mit dem Rad, an dessen Nabe das elektromechanische System befestigt ist. Das Sensorsystem sitzt typischerweise auf einer Hauptplatine des elektromechanischen Systems.

Alle lokalen Bewegungsachsen, bezüglich derer die linearen Bewegungen gemessen werden, bilden bevorzugt ein orthogonales System. Alle lokalen Drehachsen, bezüglich derer die Winkelbewegungen gemessen werden, bilden bevorzugt ein orthogonales System. Falls vorhanden bilden bevorzugt auch alle lokalen Magnetfeldmessachsen ein orthogonales System (siehe weiter unten). Typischerweise sind die vermessenen lokalen Bewegungsachsen gleich gewählt den vermessenen lokalen Drehachsen, und gegebenenfalls auch gleich gewählt den vermessenen lokalen Magnetfeldmessachsen.

Die lokalen Achsen des elektromechanischen Systems (das sind lokale Bewegungsachsen, lokale Drehachsen, lokale Magnetfeldmessachsen) bewegen sich mit dem elektromechanischen System.

Über eine geeignete Koordinatentransformation können die Messdaten für die lokalen Achsen des elektromechanischen Systems auf Achsen des Fahrzeugs umgerechnet werden, an dessen Radnabe das elektromechanische System befestigt ist. Die Koordinatentransformation kann insbesondere in einer Auswerteeinrichtung des elektromechanischen Systems erfolgen, alternativ auch in einem elektronischen System des Fahrzeugs. Die Koordinatenachsen des Fahrzeugs liegen im Fahrzeug fest und bewegen sich also zusammen mit dem gesamten Fahrzeug.

Typischerweise sind die Koordinatenachsen des Fahrzeugs, auf welche die Messdaten umgerechnet werden, gewählt wie folgt:
- x-Achse, das ist die (horizontale) Vorwärtsfahrtrichtung des Fahrzeugs;
- y-Achse, das ist die horizontale Richtung senkrecht zur Vorwärtsfahrtrichtung; und
- z-Achse, das ist die vertikale Richtung senkrecht zur Vorwärtsfahrtrichtung. Die x-Achse als Drehachse entspricht der Rollachse, die y-Achse als Drehachse entspricht der Nickachse, und die z-Achse als Drehachse entspricht der Gierachse.

Die Messung der linearen (geradlinigen) Bewegungen erfolgt typischerweise mittels Beschleunigungssensoren.

Die Messung der Winkelbewegungen erfolgt typischerweise mittels eines Gyroskops.

Die Messung von Magnetfeldstärken erfolgt typischerweise mittels Hall-Effekt oder magnetoresistiver (MR) Sensoren.

Bevorzugt ist eine Weiterbildung dieser Ausführungsform, bei der das Sensorsystem weiterhin eingerichtet ist zur Messung
- von linearen Bewegungen des elektromechanischen Systems bezüglich einer dritten lokalen Bewegungsachse, wobei alle lokalen Bewegungsachsen linear unabhängig sind,
- als auch von Winkelbewegungen des elektromechanischen Systems bezüglich einer dritten lokalen Drehachse, wobei alle lokalen Drehachsen linear unabhängig sind. Das Sensorsystem misst in diesem Fall insgesamt drei lineare Bewegungen und drei Drehbewegungen, und erzeugt entsprechend eine 6D-Bewegungsinformation. Dadurch sind noch genauere Aussagen über die Position, Orientierung und Bewegung im Raum des zugehörigen Fahrzeugrades während der Fahrt möglich.

Ebenfalls bevorzugt ist eine Weiterbildung, bei der das Sensorsystem weiterhin eingerichtet ist zur Messung
- einer Magnetfeldstärke an einem Messort im elektromechanischen System bezüglich zumindest einer ersten lokalen Magnetfeldmessrichtung und einer zweiten lokalen Magnetfeldmessrichtung, die linear unabhängig sind. Durch die Messung der Magnetfeldstärke kann das Erdmagnetfeld vermessen werden, und insbesondere eine Orientierung des elektromechanischen Systems bzw. des zugehörigen Fahrzeugrades relativ zum Erdmagnetfeld bestimmt werden.

Eine Untervariante der obigen Weiterbildung sieht vor, dass das Sensorsystem weiterhin eingerichtet ist zur Messung
- der Magnetfeldstärke am Messort im elektromechanischen System bezüglich einer dritten lokalen Magnetfeldmessrichtung, wobei alle lokalen Magnetfeldmessrichtungen linear unabhängig sind. Dadurch kann die Vermessung des Erdmagnetfelds und die Bestimmung der Orientierung des elektromechanischen Systems im Erdmagnetfeld noch genauer erfolgen.

Bei einer bevorzugten Weiterbildung sind eine lokale Bewegungsachse und eine lokale Drehachse als die Längsachse des elektromechanischen Systems gewählt, welche auch einer Rotationsachse der Radnabe im montierten Zustand des elektromechanischen Systems entspricht,
insbesondere wobei auch eine lokale Magnetfeldmessachse als die Längsachse des elektromechanischen Systems gewählt ist. Über die lokale Drehachse entlang der Rotationsachse der Radnabe kann die Umdrehungsgeschwindigkeit (bzw. Drehzahl) des zugehörigen Rades direkt bestimmt werden. Über die lokale Bewegungsachse entlang der Rotationsachse kann eine momentane seitliche Schleuderbewegung leicht erkannt werden.

Vorteilhaft ist weiterhin eine Ausführungsform, bei der der Generator einen im elektromechanischen System festen Stator und einen gegenüber dem Stator drehbeweglichen Rotor umfasst, wobei der Rotor mit einer Unwucht ausgebildet ist. Die Unwucht bleibt durch ihre Gewichtskraft stets in einer bezüglich der Richtung der Gravitation unteren Position, auch wenn sich das Rad dreht. Der am elektromechanischen System fest angeordnete Stator dreht sich bei drehendem Rad mit dem Rad. Dadurch bewegt sich der Rotor gegenüber dem Stator, was für die Erzeugung von elektrischer Energie ausgenutzt werden kann. Die Drehachse des Rotors liegt im Allgemeinen entlang der Längsachse des elektromechanischen Systems und entlang der Rotationsachse des Rades. Von der Unwucht abgesehen ist das elektromechanische System bevorzugt näherungsweise drehsymmetrisch bezüglich der Längsachse aufgebaut, um die sich die Radnabe im montierten Zustand dreht. Dadurch werden bei Drehung des Fahrzeugrades durch Zentrifugalkraft bedingte Kräfte auf das elektromechanische System vergleichmäßigt, und insbesondere unsymmetrische rotierende Kräfte quer zur Längsachse auf das elektromechanische System minimiert. Dadurch wird das elektromechanische System mechanisch weniger belastet. Insbesondere können Speicherelemente des elektromechanischen Systems einzeln oder in Gruppen in gleichmäßigen Winkelabständen und mit gleichem Radius um die Längsachse verteilt angeordnet werden. Beispielsweise können die Speicherelemente paarweise gegenüberliegend (also um 180° versetzt) und mit gleichem Radius bezüglich der Längsachse angeordnet werden.

Bevorzugt ist eine Weiterbildung der obigen Ausführungsform, die vorsieht,
dass der Rotor innerhalb des Stators drehbar gelagert ist,
dass am Rotor ein oder mehrere Permanentmagnete ausgebildet sind,
und dass am Stator ein oder mehrere elektro-magnetische Spulen ausgebildet sind. Durch die Anordnung der elektro-magnetischen Spulen am Stator, der im elektromechanischen System ortsfest angeordnet ist, werden zur Stromübertragung an das (übrige) elektromechanische System keine Schleifkontakte (wie Bürsten) benötigt, was die Verschleißfestigkeit verbessert, und insbesondere wartungsarm, langlebig, zuverlässig und energetisch effizient ist. Durch die Anordnung des Rotors innerhalb des Stators steht für die elektro-magnetischen Spulen um den Rotor herum gut nutzbarer Bauraum zur Verfügung. Die auf dem Rotor angeordneten Permanentmagnete liegen axial im Bereich der Spulen, und die Unwucht liegt typischerweise axial neben den Spulen. Insgesamt ist mit dieser Ausführungsform ein sehr kompakter und effizienter Aufbau möglich.

Bei einer vorteilhaften Ausführungsform weist das elektromechanische System eine Zwischenplatine und eine Hauptplatine auf,
wobei elektrische Verbindungen eingerichtet sind
   - zwischen der Zwischenplatine und dem Speichersystem,
   - zwischen dem Speichersystem und der Hauptplatine, und
   - zwischen der Zwischenplatine und der Hauptplatine,
insbesondere wobei weiterhin elektrische Verbindungen eingerichtet sind
   - zwischen dem Generator und der Zwischenplatine, und/oder
   - zwischen der Hauptplatine und dem Motor.

Über die Zwischenplatine und die Hauptplatine können die elektrischen Verbindungen (für Energieversorgung und/oder Steuersignale und/oder Messsignale) der wesentlichen Bauteile des elektromechanischen Systems auf einfache Weise eingerichtet werden. Typischerweise ist das Speichersystem zwischen der Zwischenplatine und der Hauptplatine angeordnet, und die einzelnen Speicherelemente des Speichersystems können mit ihren elektrischen Polen auf die Zwischenplatine und die Hauptplatine ausgerichtet und von diesen beiden Platinen aus auf einfache Weise kontaktiert werden. Typischerweise sind die beiden Platinen jeweils senkrecht zur Längsachse orientiert, und die Speicherelemente sind entlang der Längsachse orientiert. Über die Zwischenplatine kann insbesondere eine Akkumulation der Massepotentiale des Generators und des Speichersystems erfolgen. Von der Zwischenplatine können das akkumulierte Massenpotential und weitere elektronische Signale zur Hauptplatine übertragen werden. Auf der Hauptplatine sind im Allgemeinen elektronische Bauteile wie Prozessoren, Steuereinrichtungen, Auswerteeinrichtungen, Sensoren und Kommunikationseinrichtungen angeordnet. Typischerweise wird an der Hauptplatine der Motor angeschlossen.

Bevorzugt ist eine Weiterbildung dieser Ausführungsform, bei der alle elektrischen Verbindungen des elektromechanischen Systems zwischen dem Generator, der Zwischenplatine, dem Speichersystem, der Hauptplatine und dem Motor mittels Federkontaktstiften und/oder starren Verbindungsstiften eingerichtet sind. Durch die elektrischen Verbindungen mittels Federkontaktstiften und starren Verbindungsstiften wird eine besonders hohe mechanische Steifigkeit und hohe Robustheit erreicht; die Federkontaktstifte und starren Verbindungsstifte bleiben auch bei schneller Rotation des elektromechanischen Systems formstabil und verschleißen nicht oder nur sehr wenig. Auch Vibrationen machen den Federkontaktstiften und starren Verbindungsstiften wenig aus. Im Gegensatz dazu könnten flexible Kabelverbindungen durch Fliehkräfte, insbesondere auch in der Stärke wechselnde Fliehkräfte, oder auch Vibrationen leicht ermüden und brechen. Man beachte, dass auf den Platinen typischerweise elektrische Verbindungen über auf der Platine aufgebrachte Leiterbahnen (lokale leitfähige Beschichtungen, z.B. aus Kupfer) eingerichtet werden, die ebenfalls formstabil bleiben. Weitere elektrische Verbindungen werden grundsätzlich nicht benötigt.

Bei einer bevorzugten Weiterbildung des elektromechanischen Systems, welches mit der Zwischenplatine und der Hauptplatine ausgebildet ist und dessen elektrische Verbindungen zwischen Generator, Zwischenplatine, Speichersystem, Hauptplatine und Motor ausschließlich mit Federkontaktstiften und/oder starren Verbindungsstiften eingerichtet ist, ist vorgesehen, dass Federkontaktstifte die elektrischen Verbindungen einrichten
- zwischen der Zwischenplatine und dem Speichersystem, und
- zwischen dem Speichersystem und der Hauptplatine,
   insbesondere wobei Federkontaktstifte weiterhin die elektrischen Verbindungen einrichten
- zwischen einer Generatorplatine des Generators und der Zwischenplatine, und/oder
- zwischen einer Motorplatine des Motors und der Hauptplatine. Ein Federkontaktstift kann gegen die Kraft einer Feder entlang seiner Längsrichtung gestaucht werden, und dabei bei jeder Auszugslänge eine elektrische Verbindung zwischen seinen axialen Enden einrichten. Mit den Federkontaktstiften wird das Zusammenfügen des elektromechanischen Systems erleichtert, und gleichzeitig eine auch bei Fliehkräften robuste und zuverlässige elektrische Verbindung eingerichtet. Insbesondere können die Speicherelemente zwischen bereits starr verbundener Zwischenplatine und Hauptplatine noch auf einfache Weise eingefügt werden. Ebenso kann auf einfache Weise der Generator auf die Zwischenplatine aufgesetzt und elektrisch kontaktiert oder auch der Motor auf der Hauptplatine aufgesetzt und elektrisch kontaktiert werden (oder jeweils umgekehrt).

Vorteilhaft ist eine Ausführungsform, bei der das elektromechanische System mehrere Federkontaktstifte zur Einrichtung von elektrischen Verbindungen umfasst. Ein Federkontaktstift kann gegen die Kraft einer Feder entlang seiner Längsrichtung gestaucht werden, und dabei bei jeder Auszugslänge eine elektrische Verbindung zwischen seinen axialen Enden einrichten. Die Federkontaktstifte sind im Wesentlichen starr; lediglich der in der Hülse gehaltene Stift ist in Längsrichtung beweglich. Die Federkontaktstifte haben eine hohe Hitze-, Schock- und Vibrationsbeständigkeit. Mit den Federkontaktstiften wird zudem das Zusammenfügen des elektromechanischen Systems erleichtert. Es wird eine auch bei Fliehkräften robuste und zuverlässige elektrische Verbindung eingerichtet.

Besonders bevorzugt ist eine Ausführungsform, bei der das elektromechanische System eine erste Kommunikationseinrichtung, eingerichtet für eine drahtlose Kommunikation zu einem elektronischen System des Fahrzeugs, aufweist, insbesondere wobei die erste Kommunikationseinrichtung für eine drahtlose Kommunikation mittels BLE(=Bluetooth Low Energy)-Standard eingerichtet ist. Über die erste Kommunikationseinrichtung können insbesondere Messdaten oder aus Messdaten gewonnene Informationen vom elektromechanischen System an das elektronische System des Fahrzeugs weitergegeben werden, oder auch Steuerinformationen vom elektronischen System des Fahrzeugs an das elektromechanische System gegeben werden. Durch die drahtlose Kommunikation wird keine Kabelverbindung benötigt, und die Montage des elektromechanischen Systems am Fahrzeug ist besonders einfach. Mittels BLE kann ein besonders niedriger Energieverbrauch erreicht werden; zudem kann eine Steuerung des Stromverbrauchs gemäß Fahrzeugzustand (power saving states) bei gleichzeitig zuverlässiger Datenkommunikation zum Fahrzeug (trotz Rotation des elektromechanischen Systems) und schnellem erneutem Verbindungsaufbau (schnelles so genanntes Re-pairing) realisiert werden.

Vorteilhaft ist weiterhin eine Ausführungsform, bei der das elektromechanische System eine zweite Kommunikationseinrichtung, eingerichtet für eine drahtlose Kommunikation zu einem oder mehreren externen Sensoren, aufweist, insbesondere wobei die zweite Kommunikationseinrichtung für eine drahtlose Kommunikation mittels einer RF-Verbindung oder NFC-Verbindung ausgebildet ist,
und insbesondere wobei die zweite Kommunikationseinrichtung auch für eine drahtlose Energieübertragung zu dem einen oder den mehreren externen Sensoren als passive externe Sensoren eingerichtet ist. Die externen Sensoren sind entfernt vom elektromechanischen System angeordnet. Mit der zweiten Kommunikationseinrichtung können externe Sensoren, die typischerweise ebenfalls am Fahrzeugrad angeordnet sind, ausgelesen werden, beispielsweise ein Sensor zur Messung des Reifendrucks. Wenn eine drahtlose Energieübertragung zu den externen Sensoren eingerichtet ist, benötigt der externe Sensor keine eigene Energieversorgung, wodurch der zweite Sensor besonders einfach und wartungsfreundlich ist.

Bei einer vorteilhaften Ausführungsform weist das elektromechanische System eine Auswerteeinrichtung zur Auswertung von Messdaten von Sensoren des elektromechanischen Systems und/oder von externen Sensoren auf. Durch eine Auswertung können aus den Messdaten für den Fahrbetrieb und die Steuerung des Fahrzeugs besonders relevante Informationen gewonnen werden; diese können im elektromechanischen System selbst genutzt werden (z.B. Temperaturinformationen für das Energiemanagement) oder auch an ein elektronisches System des Fahrzeugs übertragen werden und dort genutzt werden (z.B. für die Fahrwerksabstimmung oder ein ESP-Programm). Typischerweise benötigen diese besonders relevanten Informationen weniger Speicherplatz und/oder Datenübertragungskapazität als die zugrundeliegenden Messdaten, oder sind leichter weiterzuverarbeiten. Die Auswerteeinrichtung (auch Auswerteeinheit genannt) kann insbesondere die Messdaten (die meist Spannungswerte oder Stromwerte sind) in physikalische Größen umrechnen (z.B. in eine Temperatur oder eine Geschwindigkeit), und ggf. auch die Messdaten oder errechnete physikalische Größen gemäß einer Programmierung weiterverarbeiten, z.B. mit Schwellwerten vergleichen. Oft ist die Auswerteeinrichtung mit einer Steuereinheit (beispielsweise für das Energiemanagement oder für das Kühlungsmanagement) zusammengeschaltet oder in diese integriert, und die Steuereinheit erzeugt dann auch Steuerbefehle, z.B. für das Aktivieren oder Deaktivieren von Komponenten, oder auch für das Öffnen und Schließen einer Felgenabdeckung. Die Auswerteeinrichtung (und ggf. die Steuereinheit) ist typischerweise auf der Hauptplatine angeordnet.

Bei einer vorteilhaften Ausführungsform weist das elektromechanische System wenigstens einen Temperatursensor auf. Mit dem Temperatursensor kann erkannt werden, ob das elektromechanische System bzw. eine Komponente davon in Hinblick auf seine Temperatur betriebsbereit ist oder nicht. Gegebenenfalls kann mit der Temperaturinformation erkannt werden, ob die betroffene Komponente abgeschaltet werden muss oder wieder angeschaltet werden kann, oder auch ob Kühlungsmaßnahmen (z.B. das Öffnen einer Felgenabdeckung) erfolgen müssen oder wieder beendet werden können.

Bevorzugt ist eine Weiterbildung dieser Ausführungsform, bei der das elektromechanische System mehrere Temperatursensoren aufweist, die jeweils eine Temperatur an einem unterschiedlichen Ort am elektromechanischen System messen,
insbesondere wobei jeweils wenigstens ein Temperatursensor angeordnet ist am Generator, am Motor, am Speichersystem und an einer Hauptplatine des elektromechanischen Systems. In einer anderen Variante können auch Temperatursensoren jeweils vorgesehen sein am Generator, am Motor und auf der Hauptplatine. Durch mehrere Temperatursensoren an unterschiedlichen Orten kann für dortige Komponenten des elektromechanischen Systems einzelnen bestimmt werden, ob diese betriebsbereit sind oder nicht, und entsprechend kann dann eine für die derzeitige Betriebssituation genau abgestimmte weitere Steuerung der einzelnen Komponenten (anschalten oder abschalten) vorgenommen werden. Beispielsweise kann bei einer Überhitzung nur des Generators ein Weiterbetrieb des elektromechanischen Systems erfolgen, unter Abschaltung des Generators, und Energiebereitstellung dann nur noch aus dem Speichersystem, solange noch genug gespeicherte elektrische Energie vorrätig ist. Bei drohender Überhitzung des Motors sollten sofort Kühlmaßnahmen getroffen werden (insbesondere Öffnen der Felgenabdeckung), bevor die Kühlmaßnahmen (z.B. eine solche Öffnung) nicht mehr möglich sind. Wenn die Hauptplatine überhitzt, sollten zum einen Kühlmaßnahmen getroffen werden und zum anderen das elektromechanische System abgeschaltet werden, um Fehlauswertungen und Fehlmessungen der Sensoren zu vermeiden, und auch um die Bauteile auf der Hauptplatine zu schützen. Jede Komponente kann einen eigenen ersten Temperaturschwellwert zugewiesen bekommen, ab welchem der Betrieb der Komponente nicht mehr zuverlässig erfolgen kann, und/oder einen zweiten Temperaturschwellwert, ab dem die Komponente irreversibel beschädigt würde. Diese Temperaturschwellwerte können dann im Kühlungsmanagement berücksichtigt werden.

Vorteilhaft ist weiterhin eine Ausführungsform, bei der das elektromechanische System einen oder mehrere Drucksensoren zur Messung eines Drucks in der Umgebung des elektromechanischen Systems umfasst,
insbesondere wobei mit dem einen oder den mehreren Drucksensoren eine Messung eines Luftwiderstands erfolgen kann. Das Ergebnis der Druckmessung kann für die Fahrzeugsteuerung und/oder für eine Ansteuerung der Felgenabdeckungen verwendet werden.

Bevorzugt ist weiterhin eine Ausführungsform, bei der das elektromechanische System wenigstens eine Beleuchtungseinrichtung umfasst, welche mittels des Generators und/oder des Speichersystems mit elektrischer Energie versorgt wird, insbesondere wobei die wenigstens eine Beleuchtungseinrichtung eine oder mehrere der folgenden Funktionalitäten aufweist:
Fahrtrichtungsanzeiger, Warnbeleuchtung, Notfallbeleuchtung, Positionsbeleuchtung, Zierbeleuchtung. Mit der Beleuchtungseinrichtung kann am elektromechanischen System Licht erzeugt werden, um die Beleuchtungseinrichtung selbst besser sichtbar zu machen, oder auch um die Umgebung zu erleuchten. Leuchtmittel ist bevorzugt eine LED oder ein LED-System. Das Beleuchtungssystem wird typischerweise über Steuerbefehle des elektronischen Systems des Fahrzeugs aktiviert und/oder deaktiviert; es kann aber auch aufgrund eigener Messdaten des elektromechanischen Systems aktiviert und/oder deaktiviert werden. Beispielsweise kann eine Warnbeleuchtung oder Notfallbeleuchtung nach Feststellung einer Beschleunigung über einem Grenzwert, der auf einen Crash hindeutet, aktiviert werden. Eine Warnbeleuchtung kann auch bei einem scharfen Bremsen, das mit Sensoren des elektromechanischen Systems selbst gut feststellbar ist, aktiviert werden. Eine Notfallbeleuchtung des elektromechanischen Systems kann genutzt werden, auch wenn das elektrische Bordnetz des Fahrzeugs ausgefallen ist, beispielsweise wenn das Fahrzeug nach einer Panne oder einem Umfall am Straßenrand steht. Eine Zierbeleuchtung kann beispielsweise ein gewünschtes Markenlogo des Fahrzeugherstellers zeigen.

Vorteilhaft ist auch eine Ausführungsform, bei der das elektromechanische System wenigstens einen magnetbetätigten Schalter aufweist, mit welchem das elektromechanische System ganz und/oder teilweise von außerhalb eines Gehäuses des elektromechanischen Systems aktiviert und deaktiviert werden kann. Die Betätigung des magnetbetätigten Schalters (auch genannt Magnetschalter) erfolgt dann typischerweise in einer Werkstatt. Der magnetische Schalter liegt innerhalb eines Gehäuses des elektromechanischen Systems und benötigt zur Betätigung keine Öffnungen im Gehäuse, durch die Schmutz eindringen könnte; es genügt das geeignete Heranführen oder Vorbeiführen eines externen Magneten (beispielsweise eine Drehbewegung eines Magneten) an einer bestimmten Stelle des Gehäuses, die typischerweise zu diesem Zwecke markiert ist. Beispielsweise kann bei der saisonalen Einlagerung von Fahrzeugrädern mitsamt dem elektromechanischen System dieses über den Magnetschalter deaktiviert werden, und beim erneuten Montierten der Fahrzeugräder erfolgt eine Reaktivierung mit dem Magnetschalter.

Bevorzugt ist auch eine Ausführungsform, bei der das elektromechanische System eine Energiesteuereinrichtung zur Steuerung eines Verbrauchs von elektrischer Energie aufweist, mit der Komponenten und/oder Funktionen von Komponenten des elektromechanischen Systems aktiviert und deaktiviert werden können. Dadurch kann das elektromechanische System besonders effizient eingesetzt werden und/oder die Betriebsbereitschaft erhöht werden. Unnötiges Entleeren des Speichersystems wird vermieden, oder der Energieverbrauch wird bei niedrigerem Speicherstand auf wenige besonders wichtige Funktionen beschränkt, ggf. auch in Stufen. Die Energiesteuereinrichtung kann beispielsweise nach Bedarf ein zeitweises teilweises oder vollständiges Abschalten der ersten Kommunikationseinheit (Power Savings Modi bei BLE) vorsehen, beispielsweise ein Abschalten des Transceivers in Kommunikationspausen. Ein Abschalten von Komponenten, insbesondere Kommunikationseinrichtungen, kann insbesondere bei längerem Fahrzeugstillstand ("Parken") vorgesehen werden. Je nach Energievorrat und/oder Generatorleistung können kürzere oder längere Datenübertragungsintervalle von Kommunikationseinheiten vorgesehen werden. Zudem kann eine temperatur- und geschwindigkeitsabhängige Steuerung des Aktuators vorgesehen werden. Durch das elektronische System des Fahrzeugs kann über einen übermittelten Steuerbefehl ein Schlafmodus des elektromechanischen Systems aktiviert werden (z.B. wenn ein Parken des Fahrzeugs erfolgt ist), in welchem das elektromechanische System weitgehend deaktiviert ist. Das Beenden des Schlafzustands kann auch über externen Befehl des elektronischen Systems des Fahrzeugs erfolgen, falls gewünscht. Bevorzugt wird jedoch ein (notwendiges) Ende des Schlafzustand durch das elektromechanische System selbst gesetzt, beispielsweise wenn es eine Radbewegung erkennt.

Besonders bevorzugt ist eine Weiterbildung dieser Ausführungsform, bei der die Energiesteuereinrichtung so eingerichtet ist, dass
- bei Unterschreiten eines ersten Schwellwerts von momentan gespeicherter elektrischer Energie im Speichersystem ein oder mehrere Komponenten und/oder Funktionen von Komponenten deaktiviert werden, und/oder
- bei Überschreitung eines zweiten Schwellwerts von momentaner Leistung des Generators ein oder mehrere abgeschaltete Komponenten oder Funktionen von Komponenten reaktiviert werden. Bei Unterschreiten des ersten Schwellwerts kann durch Abschalten von Komponenten oder Funktionen die verbleibende Energie für besonders wichtige, verbleibende Komponenten oder Funktionen reserviert werden. Bei Überschreiten des zweiten Schwellwerts ist erkennbar, dass (voraussichtlich) wieder ausreichend neue Energie zur Verfügung steht, um eine Reaktivierung von Komponenten oder Funktionen einrichten zu können. Alternativ oder zusätzlich kann vorgesehen sein, dass das elektromechanische System über einen externen Befehl (z.B. von einer elektronischen Steuerung des Fahrzeugs) in einen Energiesparmodus (Schlafmodus) versetzt werden kann, in welchem ein oder mehrere Komponenten und/oder Funktionen von Komponenten deaktiviert sind. Bei Überschreiten des zweiten Schwellwerts kann eine Reaktivierung der einen oder mehreren abgeschalteten Komponenten oder Funktionen von Komponenten erfolgen.

Bei einer vorteilhaften Ausführungsform weist das elektromechanische System ein Gehäuse mit einem Außengewinde zum Einschrauben in die Radnabe des Fahrzeugs auf. Mittels des Außengewindes am Gehäuse kann auf einfache Weise eine Positionierung und Befestigung des elektromechanischen Systems in der Radnabe erfolgen. Die Einschraubung kann falls gewünscht gesichert werden, beispielsweise mit einer ebenfalls am Außengewinde angeordneten Kontermutter, die gegen einen oberen Anschlag der Radnabe verspannt wird.

Bevorzugt ist weiterhin eine Ausführungsform, die vorsieht, dass das Speichersystem wiederaufladbare Batterien und/oder Kondensatoren hoher Kapazität, insbesondere Elektrolytkondensatoren, umfasst. Mit wiederaufladbaren Batterien kann eine große Energiemenge auch über längere Zeit auf geringem Raum gespeichert werden; bevorzugt sind längliche Batterien mit endseitigen, einander gegenüberliegenden Polen, beispielsweise wiederaufladbare AA-Batterien. Mit Kondensatoren kann ein besonders schnelles Laden und Entladen erfolgen, wobei besonders viele Ladezyklen möglich sind. Ein Kondensator hoher Kapazität für die Erfindung hat typischerweise eine Kapazität von wenigstens 100 µF, oft wenigstens 0,1 F, bevorzugt wenigstens 1 F, besonders bevorzugt wenigstens 10 F. Insbesondere können so genannte Super Caps eingesetzt werden.

Bevorzugt ist weiterhin eine Ausführungsform, die vorsieht,
dass das elektromechanische System ein Gehäuse aufweist, welches eine zumindest im Wesentlichen entlang der Längsachse verlaufende Längswand aufweist, in welchem wenigstens eine Durchgriffstelle für den Aktuator eingerichtet ist,
dass im Bereich einer jeweiligen Durchgriffstelle in der Längswand ein äußerer Wandteil und ein innerer Wandteil eingerichtet sind, die
   - parallel zur Längsachse verlaufen,
   - aber in Querrichtung senkrecht zur Längsachse voneinander beabstandet sind,
   - entlang der Längsachse zumindest teilweise gegeneinander versetzt sind, so dass ein inneres freies Ende des inneren Wandteils und ein äußeres freies Ende des äußeren Wandteils im Bereich der Durchgriffstelle einander gegenüberliegen,
und dass der Aktuator an einer jeweiligen Durchgriffstelle aufweist:
   - einen Mittelabschnitt, der entlang der Längsachse verläuft und in Querrichtung zwischen dem inneren Wandteil und dem äußeren Wandteil angeordnet ist,
   - einen inneren Kragen, der an einem Ende des Mittelabschnitts, welcher dem inneren freien Ende abgewandt ist, ausgebildet ist und in Querrichtung über das innere freie Ende nach innen ausgreift, und
   - einen äußeren Kragen, der an einem Ende des Mittelabschnitts, welcher dem äußeren freien Ende abgewandt ist, ausgebildet ist und in Querrichtung über das äußere freie Ende nach außen ausgreift. Mit dieser Ausführungsform kann der Aktuator auf einfache Weise durch das Gehäuse nach außen ausgreifen, und somit außerhalb des Gehäuses eine Bewegung (z.B. einer Felgenabdeckung) bewirken, und gleichzeitig die Durchgriffstelle weitgehend abdecken und so das Innere des Gehäuses vor Verschmutzung schützen. Beim Verfahren des Aktuators verfährt dessen Mittelabschnitt vor dem inneren Wandteil und hinter dem äußeren Wandteil im radialen Zwischenraum zwischen diesen Wandteilen. Mit dem inneren Kragen und äußeren Kragen kann zum einen jeweils eine Endposition des Aktuators definiert werden, und zum anderen wird ein Schmutzeintritt über das jeweilige freie Ende des jeweiligen Wandteils minimiert. Die axiale Länge des Mittelabschnitts zwischen den Krägen bestimmt (soweit es die Durchgriffstelle betrifft) den maximalen Verfahrweg des Aktuators. Am äußeren Teil des Aktuators kann ein zu betätigendes Bauteil angekoppelt werden, z.B. eine Felgenabdeckung oder ein Teil davon.

Ebenfalls bevorzugt ist eine Ausführungsform des erfindungsgemäßen elektromechanischen Systems, die vorsieht,
dass das elektromechanische System ein Gehäuse aufweist, welches eine im Wesentlichen entlang der Längsachse verlaufende Längswand umfasst,
wobei in der Längswand wenigstens eine Durchgriffstelle für den Aktuator vorgesehen ist,
wobei der Aktuator im Bereich der Durchgriffstelle einen entlang der Längsachse verlaufenden Mittelabschnitt aufweist, der in Querrichtung zwischen einem inneren Wandteil und einem äußeren Wandteil der Längswand angeordnet ist,
wobei der innere Wandteil und der äußere Wandteil parallel zur Längsachse verlaufen, in Querrichtung voneinander beabstandet sind und entlang der Längsachse gegeneinander versetzt angeordnet sind,
und wobei der Aktuator im Bereich der Durchgriffstelle einen inneren Kragen und einen äußeren Kragen aufweist, die derart ausgebildet sind, dass der innere Kragen eine axiale Abstützung am inneren Wandteil und der äußere Kragen eine axiale Abstützung am äußeren Wandteil bewirken.

### Erfindungsgemäße Verwendungen

In den Rahmen der vorliegenden Erfindung fällt auch die Verwendung von wenigstens zwei erfindungsgemäßen, oben beschriebenen elektromechanischen Systemen,
wobei die wenigstens zwei elektromechanischen Systeme in den zentralen Hohlräumen von Radnaben wenigstens zweier Fahrzeugräder, insbesondere gelenkter Fahrzeugräder, eines Fahrzeugs ortsfest angeordnet sind,
wobei ein jeweiliges elektromechanische System mittels einer oder mehrerer Sensoren des elektromechanischen Systems Messdaten zu einem derzeitigen Zustand des Fahrzeugrades erfasst,
wobei mittels einer ersten Kommunikationseinrichtung des elektromechanischen Systems diese Messdaten oder aus diesen Messdaten gewonnene Informationen drahtlos an ein elektronisches System des Fahrzeugs weitergeleitet werden,
und wobei das elektronische System des Fahrzeugs die weitergeleiteten Messdaten oder Informationen bei einer Einstellung von Fahrzeugeigenschaften und/oder bei der Steuerung des Fahrzeugs berücksichtigt. Die elektromechanischen Systeme können auf einfache Weise Messdaten oder aus den Messdaten gewonnene Informationen für das elektronische System des Fahrzeugs zur Verfügung stellen. Die elektromechanischen Systeme weisen eine hohe Betriebsbereitschaft auf und können kompakt ausgebildet werden, so dass Bauraum für gewünschte Sensoren und andere gewünschte Bauteile oder Komponenten zur Verfügung steht. Zudem kann mit dem Motor und dem Aktuator des jeweiligen elektromechanischen Systems ein angekoppeltes bewegliches Bauteil bewegt werden, insbesondere eine Felgenabdeckung geöffnet und geschlossen werden. Für die Ansteuerung einer Felgenabdeckung können Messdaten oder daraus abgeleiteten Informationen des lokalen elektromechanischen Systems und/oder anderer elektromechanischer Systeme, insbesondere von Temperaturinformationen und/oder Geschwindigkeitsinformationen und/oder Staudruckinformationen ("Fahrtwind"), ausgewertet werden. Der eine oder die mehreren Sensoren können insbesondere ganz oder teilweise durch ein oben beschriebenes Sensorsystem eingerichtet sein.

Besonders vorteilhaft ist auch eine Variante der erfindungsgemäßen Verwendung, bei der das elektronische System des Fahrzeugs die weitergeleiteten Messdaten oder Informationen zum Betrieb eines Elektronischen Stabilitätsprogramms (=ESP) des Fahrzeugs einsetzt. Das ESP kann ausschließlich mit den Messdaten und Informationen betrieben werden, die von den elektromechanischen Systemen weitergeleitet werden, oder die besagten weitergeleiteten Messdaten und Informationen erhöhen das Sicherheitslevel eines herkömmlichen ESP durch zusätzliche Redundanz. Alternativ oder zusätzlich zu ESP kann beispielsweise mit den weitergeleiteten Messdaten oder Informationen auch eine adaptive Fahrwerkssteuerung betrieben werden.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

- Fig. 1: zeigt eine schematische Seitenansicht einer beispielhaften Ausführungsform des erfindungsgemäßen elektromechanischen Systems;
- Fig. 2: zeigt einen schematischen Längsschnitt durch die Ausführungsform von Fig. 1;
- Fig. 3: zeigt eine stark schematisierte Darstellung der Ausführungsform von Fig. 1 in Seitenansicht ohne Gehäuse, Kopplungseinrichtung und Aktuator, illustrierend elektrische Verbindungen eingerichtet durch starre Verbindungsstifte und Federkontaktstifte;
- Fig. 4: zeigt eine stark schematisierte Darstellung der Ausführungsform von Fig. 1 in einer Querschnittsansicht senkrecht zur Längsachse, illustrierend den Aufbau des Aktuators;
- Fig. 5: zeigt eine stark schematisierte Darstellung der Ausführungsform von Fig. 1 in einer Längsschnittansicht, illustrierend eine Durchgriffstelle für den Aktuator im Gehäuse;
- Fig. 6: zeigt eine stark schematisierte Darstellung eines erfindungsgemäßen elektromechanischen Systems in einer beispielhaften Ausführungsform installiert im Hohlraum einer Radnabe eines Fahrzeugrads, mit montierter Felgenabdeckung in geschlossener Position;
- Fig. 7: zeigt das installierte elektromechanische System von Fig. 6, mit der Felgenabdeckung in geöffneter Position;
- Fig. 8: zeigt eine stark schematisierte Aufsicht auf ein Fahrzeugrad mit installiertem elektromechanischen System in einer beispielhaften Ausführungsform, mit mehrteiliger Felgenabdeckung;
- Fig. 9: zeigt schematisch eine Aufsicht auf eine Hauptplatine eines erfindungsgemäßen elektromechanischen Systems in einer beispielhaften Ausführungsform;
- Fig. 10: zeigt eine stark schematisierte Seitenansicht auf ein Fahrzeug, an dessen Rädern jeweils erfindungsgemäße elektromechanische Systeme installiert sind, in einer beispielhaften erfindungsgemäßen Verwendung.

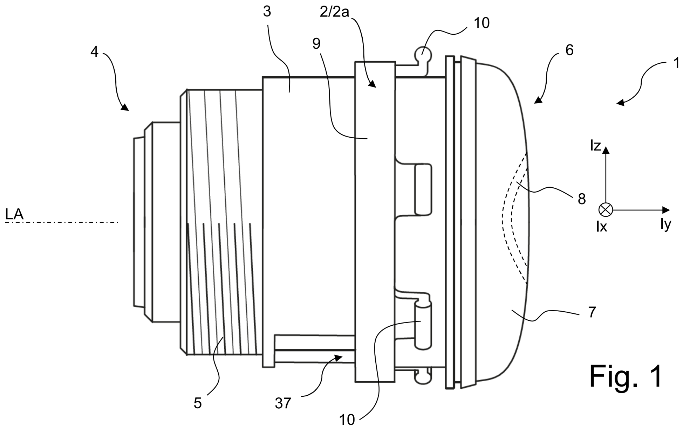

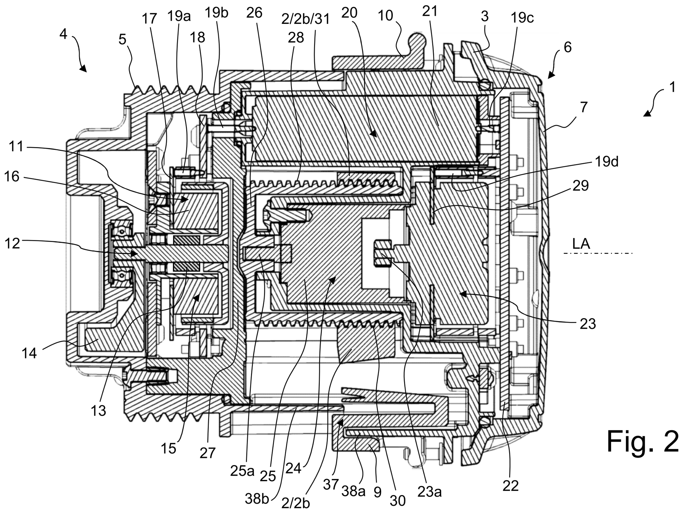

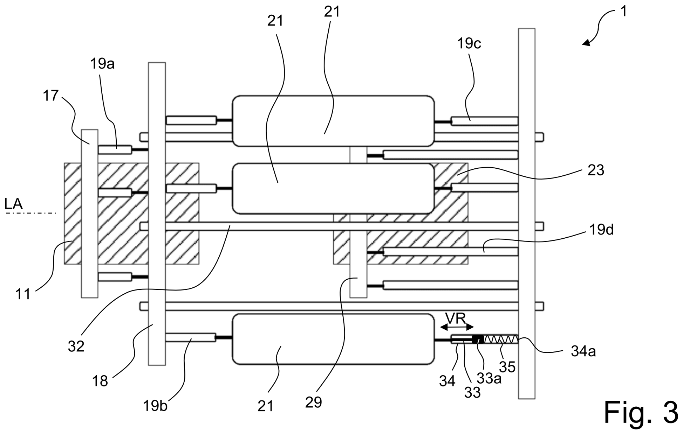

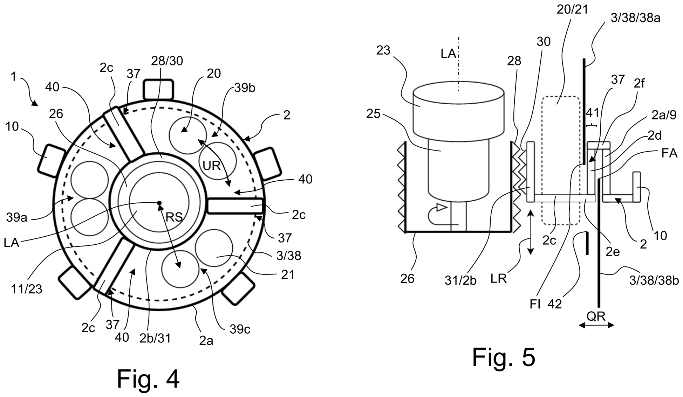

Die Figuren 1 bis 5 zeigen ein erfindungsgemäßes elektromechanisches System 1 in einer beispielhaften Ausführungsform. Die Figuren illustrieren dabei verschiedene Aspekte des elektromechanischen Systems 1 in schematisierter Weise. Die Fig. 1 zeigt eine Seitenansicht von außen, die Fig. 2 zeigt einen Längsschnitt durch alle Komponenten, Fig. 3 zeigt eine Seitenansicht auf einen inneren Teil des elektromechanischen Systems 1 insbesondere ohne Gehäuse, Fig. 4 zeigt einen Querschnitt im Bereich des Aktuators, und Fig. 5 zeigt einen weiteren Längsschnitt im Bereich einer Verbindungsstruktur 2c des Aktuators 2.

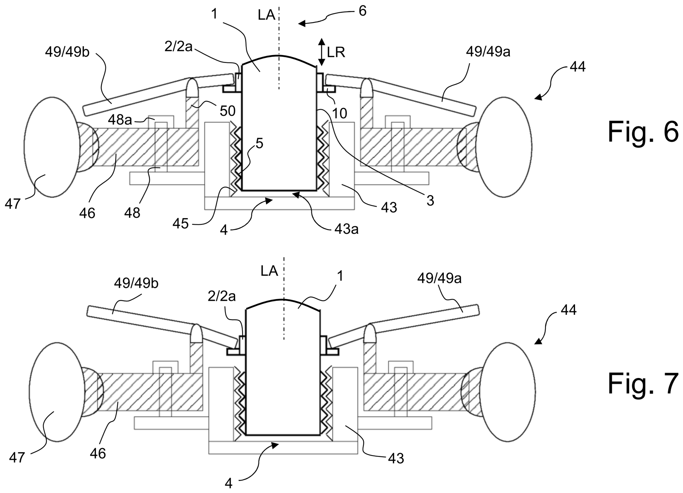

Wie in **Fig. 1** gut ersichtlich ist, besitzt das elektromechanische System 1 in der gezeigten Ausführungsform ein im Wesentlichen zylindrisches Gehäuse 3, welches im Bereich eines vorderen Endes 4 ein Außengewinde 5 ausbildet, mit welchem es in ein entsprechendes Gegengewinde einer Radnabe eingeschraubt werden kann (nicht näher dargestellt, vgl. aber z.B. Fig. 6 hierzu). Im Bereich eines hinteren Endes 6 bildet das Gehäuse 3 hier eine Endkappe 7 aus. Falls gewünscht, kann in die Endkappe 7 eine Beleuchtungseinrichtung 8 integriert sein (gestrichelt dargestellt). Entlang einer Längsachse LA des elektromechanischen Systems 1 ist ein äußerer Teil 2a des Aktuators 2 verfahrbar; der Aktuator 2 wird dabei von einem Motor angetrieben, der im Inneren des Gehäuses 3 angeordnet ist (verdeckt in Fig. 1, vgl. z.B. Fig. 2 oder Fig. 5 hierzu). Der äußere Teil 2a bildet hier einen umlaufenden Ring 9 aus, von welchem Laschen 10 abstehen. An den Laschen 10 können Schwenkklappen einer Felgenabdeckung angekoppelt werden (siehe dazu z.B. Fig. 6).

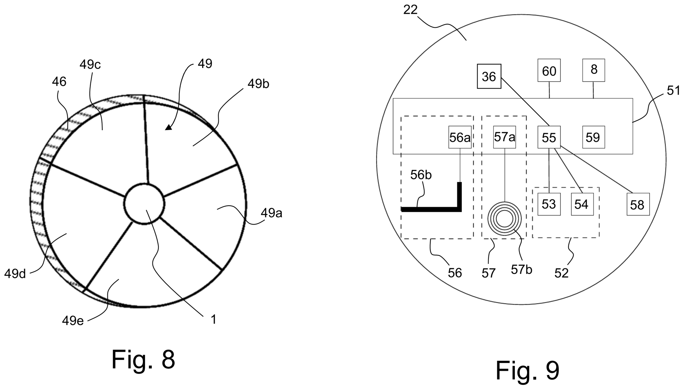

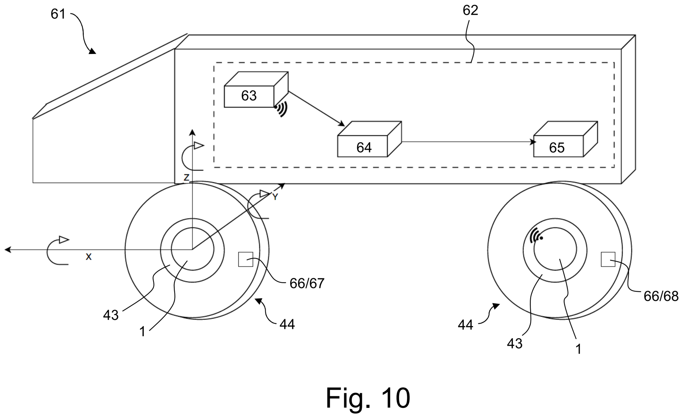

Mit einer im elektromechanischen System 1 enthaltenen Sensoreinheit (siehe Fig. 9) können hier lineare Bewegungen, Winkelbewegungen sowie Magnetfeldmessungen bezüglich der lokalen Achsen Ix, ly und Iz durchgeführt werden. Man beachte, dass sich die lokalen Achsen Ix, ly, Iz mit dem elektromechanischen System 1 bewegen, also auch durch eine Drehbewegung eines Fahrzeugrades, an welchem das elektromechanische System 1 befestigt ist, oder durch Vibrationen am Fahrzeugrad. Die lokalen Achsen Ix, ly, Iz repräsentieren entsprechend lokale (lineare) Bewegungsachsen, lokale Drehachsen und lokale Magnetfeldmessrichtungen für zugehörige Messungen; üblicherweise erfolgt eine Umrechnung von Messdaten auf die Fahrzeugachsen (siehe Fig. 10 hierzu). Die lokale Achse ly liegt hier auf der Längsachse LA, die gleichzeitig die Rotationsachse des Fahrzeugrades im montierten Zustand des elektromechanischen Systems 1 darstellt. Die lokalen Achsen Ix, ly, Iz stehen senkrecht aufeinander.

Im Längsschnitt der **Fig. 2** entlang der Längsachse LA können die innerhalb des Gehäuses 3 liegenden Komponenten bzw. Komponententeile des elektromechanischen Systems 1 ersehen werden.

Am vorderen Ende 4 ist ein Generator 11 angeordnet. Auf einem radial innen liegenden, auf der Längsachse LA sitzenden Rotor 12 sind Permanentmagnete 13 fest angeordnet. Zudem ist am Rotor 12 eine Unwucht 14 starr befestigt. Der Rotor 12 kann sich relativ zu einem Stator 15, welcher fest im elektromechanischen System 1 angeordnet ist, um die Längsachse LA drehen. Der Stator 15 weist elektro-magnetische Spulen 16 auf. Wenn sich das Rad (nicht dargestellt, vgl. aber z.B. Fig. 10 hierzu), in welchen das elektromechanische System 1 fest verbaut ist, während der Fahrt des zugehörigen Fahrzeugs dreht, so wird die Unwucht 14 durch die Schwerkraft in einer unteren Position gehalten. Entsprechend dreht sich dann der Stator 15 zusammen mit dem Fahrzeugrad um den Rotor 12 herum. Dabei induzieren die Permanentmagnete 13 einen elektrischen Strom in den elektro-magnetischen Spulen 16. Dieser elektrische Strom wird an einer Generatorplatine 17 zur Verfügung gestellt.

Die Generatorplatine 17 ist mit mehreren Federkontaktstiften 19a mit einer Zwischenplatine 18 verbunden, um an die Zwischenplatine 18 elektrische Energie zu übertragen, und auch um Steuersignale zu übergeben. Der Generator 11 durchragt hier die Zwischenplatine 18.

Zwischen der Zwischenplatine 18 und einer Hauptplatine 22, die am hinteren Ende 6 des elektromechanischen Systems 1 angeordnet ist, liegt ein Speichersystem 20 zur Speicherung von elektrischer Energie, welches hier sechs Speicherelemente 21 umfasst (in Fig. 2 ist nur eines der Speicherelemente 21 zu sehen, vgl. aber z.B. Fig. 4 hierzu). Die Speicherelemente 21 sind näherungsweise zylindrisch ausgebildet und liegen parallel zur Längsachse LA in einem radial äußeren Bereich innerhalb des Gehäuses 3. Die Speicherelemente 21 sind hier jeweils an einem endseitigen Pol über Federkontaktstifte 19b der Zwischenplatine 18 elektrisch verbunden, und an einem anderen endseitigen Pol über Federkontaktstifte 19c mit der Hauptplatine 22 elektrisch verbunden. Die Speicherelemente sind hier wiederaufladbare Batterien, z.B. Li-Ionen-Akkus.

Die Speicherelemente 21 umringen einen Motor 23 und eine Kopplungseinrichtung 24, die in einem radial inneren Bereich des Gehäuses 3 angeordnet sind. Die Kopplungseinrichtung 24 umfasst hier ein Getriebe 25, welches die Drehung einer Welle 23a (auch genannt Motorwelle) des Motors 23 auf eine Welle 25a (auch genannt Getriebewelle) des Getriebes 25 untersetzend überträgt. Weiterhin umfasst die Kopplungseinrichtung 24 eine Spindel 26, die starr an die Getriebewelle 25a gekoppelt ist. Die Spindel 26 kann auf einem Lager 27 sich um die Längsachse LA drehen. Die Spindel 26 ist hier becherförmig ausgebildet, und umgreift hier das Getriebe 25. An der radialen Außenseite der becherförmigen Spindel 26 ist ein Außengewinde 28 ausgebildet. Der Motor 23 ist mit einer Motorplatine 29 ausgebildet. Die Motorplatine 29 ist über Federkontaktstifte 19d elektrisch mit der Hauptplatine 22 verbunden. Über diese elektrischen Verbindungen kann der Motor 23 elektrische Energie beziehen und Steuerbefehle erhalten.

Auf das Außengewinde 28 der Spindel 26 aufgeschraubt ist ein innerer Teil 2b des Aktuators 2. Dieser innere Teil 2b ist als ein umlaufender Ring 31 ausgebildet und weist ein passendes Innengewinde 30 auf. Der innere Teil 2b ist mit dem äußeren Teil 2a des Aktuators 2 über Verbindungselemente starr verbunden (nicht voll erkennbar in Fig. 2, aber vgl. Fig. 4 hierzu). Der Aktuator 2 ist im elektromechanischen System 1 insgesamt drehfest gehalten, hier an den Durchgriffsöffnungen 37 des Gehäuses 3 (vgl. auch Fig. 4 hierzu). Wenn mittels des Motors 23 und des Getriebes 25 die Spindel 26 im Inneren des elektromechanischen Systems 1 um die Längsachse LA gedreht wird, so wandert der innere Teil 2b des drehfesten Aktuators 2 mit seinem Innengewinde 30 in axialer Richtung, also entlang der Längsachse LA, auf dem Außengewinde 28 der Spindel 26 entlang. Dadurch wird der Aktuator 2 insgesamt linear verfahren. Mit den Laschen 10 am äußeren Teil 2a des Aktuators 2 kann dann eine Felgenabdeckung betätigt werden (vgl. Fig. 6 und Fig. 7 hierzu).

Dadurch, dass das Speichersystem 20 und insbesondere die Speicherelemente 21 den Motor 23 radial außen umschließen, wird der Motor vor Wärmestrahlung, die von radial außen auf das Gehäuse 3 einwirkt, geschützt. Das Speichersystem 20 bewirkt eine Abschirmung von Wärmestrahlung, und auch eine Zwischenspeicherung von eingedrungener Wärme, so dass solche Wärme (zumindest bei nicht allzu langer zeitlicher Einwirkung) den Motor 23 nicht erreicht, und dieser betriebsbereit bleibt. Die Speicherelemente 21 überragen im Allgemeinen in axialer Richtung einen ganz überwiegenden Teil der axialen Länge des Motors 23 (wenigstens 75% der axialen Länge des Motors 23, bevorzugt wenigstens 90%). Zudem ist die Kopplungseinrichtung 24 axial auf der dem vorderen Ende 4 zugewandten Seite des Motors 23 angeordnet, also zwischen Generator 11 und Motor 23. Wärmestrahlung und eingeleitete Wärme, die vom vorderen Ende 4 zum elektromechanischen System 1 vordringt, wird dann durch den Generator 11 und die Kopplungseinrichtung 24 abgeschirmt oder zwischengespeichert. Im Allgemeinen überragen die Speicherelemente 21 in axialer Richtung auch einen ganz überwiegenden Teil der Kopplungseinrichtung 24 (wenigstens 75% der Länge des Getriebes 25, bevorzugt wenigstens 90%). Auch dies schützt den Motor 23 vor Überhitzung, und hält diesen in hohem Maße betriebsbereit. In ähnlicher Weise wird auch die Hauptplatine 22 vor Wärme geschützt, die vom vorderen Ende 4 her vordringt. Man beachte, dass in der Praxis im eingebauten Zustand des elektromechanischen Systems 1 an der Radnabe eines Fahrzeugrades das vordere Ende 4 den Bremsen zugewandt ist, und daher der Hitze der Bremsen am meisten ausgesetzt ist. Zudem leitet typischerweise die Wandung der Radnabe, in welche das elektromechanische System 1 eingesetzt ist, die Hitze der Bremsen zu einem gewissen Teil weiter, was zur Wärmeeinwirkung von radial außen auf das elektromechanische System führt. Diesem Wärmeeintrag kann das erfindungsgemäße elektromechanische System 1 gut begegnen, indem es die besonders empfindlichen Komponenten, das sind der Motor 23 und die Hauptplatine 22, radial mittels des Speichersystems 20 und wie hier gezeigt bevorzugt auch axial mittels des Generators 11 und der Kopplungseinrichtung 24 abschirmt.

Aus der nicht-maßstäblichen Schemadarstellung von **Fig. 3** sind die elektrischen Verbindungen der für die elektrischen Funktionen relevanten Komponenten des elektromechanischen Systems 1 ersichtlich.

Wie bereits erwähnt ist die Generatorplatine 17 des Generators 11 über Federkontaktstifte 19a mit der Zwischenplatine 18 elektrisch verbunden, insbesondere zur Weitergabe von elektrischer Energie und von Steuersignalen, ggf. auch Sensorsignalen. Die Speicherelemente 21 sind über Federkontaktstifte 19b mit der Zwischenplatine 18 elektrisch verbunden, und über Federkontaktstifte 19c mit der Hauptplatine 22. Die Motorplatine 29 des Motors 23 ist über Federkontaktstifte 19d mit der Hauptplatine 22 elektrisch verbunden, insbesondere zur Übertragung von elektrischer Energie und von Steuersignalen, ggf. auch Sensorsignalen. Zudem sind die Zwischenplatine 18 und die Hauptplatine 22 über elektrisch leitfähige, starre Verbindungsstifte 32 (auch genannt starre Verbindungsstäbe) elektrisch verbunden, zum Übertragen von elektrischer Energie und zum Austausch von Steuerbefehlen, ggf. auch Sensorsignalen.

Die Platinen 17, 18, 22, 29 sind mit nicht näher dargestellten Leiterbahnen versehen, auf die jeweils eine elektrische Kontaktierung erfolgt (nicht näher dargestellt).

Auf der Hauptplatine 22 sind elektronische Bauteile wie Steuereinrichtungen, Sensoren und drahtlose Kommunikationseinreichungen angeordnet (vgl. dazu auch Fig. 9).

Die Federkontaktstifte 19a-19d, beispielhaft dargestellt rechts unten in Fig. 3, sind jeweils aufgebaut mit einem Stift 33, der in einer metallischen Hülle 34 (auch genannt Hülse) in einer Verschieberichtung VR beweglich ist. Die Verschieberichtung VR ist hier parallel zur Längsachse LA. Dabei wird der Stift 33 mit einer in der Hülle 34 angeordneten Feder 35 in eine ausgefahrene Position vorgespannt. Die Feder 35 kann beispielsweise als eine metallische Schraubenfeder ausgebildet sein, die zwischen einem Endanschlag 34a der Hülle 34 und einem verdickten Endabschnitt 33a des Stifts 33 anliegt. Gegen die Kraft der Feder 35 kann der Stift 33 in die Hülle 34 eingeschoben bzw. eingedrückt werden. Die Hülle 34 ist typischerweise im Bereich ihres Endanschlags 34a auf einer Platine 17, 18, 22, 29 fest verankert und dadurch elektrisch kontaktiert. Der Stift 33 drückt mittels der Feder 35 auf eine Struktur (z.B. hier ein Speicherelement 21), wodurch diese Struktur elektrisch kontaktiert wird. Stift 33 und Hülle 34 sind jeweils elektrisch leitfähig (bevorzugt, indem sie aus Metall gefertigt sind) und liegen aneinander an (hier im Bereich des verdickten Endabschnitts 33a), so dass über den Federkontaktstift 19a-19d ein elektrischer Kontakt zwischen seinen Enden hergestellt werden kann. Die Federkontaktstifte erleichtern die elektrische Kontaktierung beim Zusammenbau des elektromechanischen Systems 1.

In der gezeigten Ausführungsform sind alle elektrischen Verbindungen zwischen dem Generator 11, dem Motor 23, den Speicherelementen 21, der Zwischenplatine 18 und der Hauptplatine 22 über Federkontaktstifte 19a-19d und starre Verbindungsstifte 32 eingerichtet. Diese elektrischen Verbindungen sind bezüglich der Zentrifugalkräfte, wie sie beim Rotieren des elektromechanischen Elements 2 zusammen mit dem Fahrzeugrad auftreten, relativ unempfindlich.

Die **Fig. 4** zeigt im Querschnitt senkrecht zur Längsachse LA in einem axial mittleren Bereich und **Fig. 5** in einem Längsschnitt entlang der Längsachse LA schematisch den Aufbau des elektromechanischen Systems 1. Man beachte, dass sich die Darstellung der Fig. 5 auf den Bereich rechts der Längsachse LA konzentriert (also den Bereich rechts der Längsachse LA zur Vereinfachung nicht dargestellt), und die beiden Figuren 4 und 5 jeweils nicht maßstäblich sind.

Zentral auf der Längsachse LA sind der Motor 23 und das darunter liegende Getriebe 25 angeordnet, an welches die Spindel 26 angekoppelt ist (siehe auch Fig. 2). Das Außengewinde 28 der Spindel 26 greift in das Innengewinde 31 des radial inneren Teils 2b des Aktuators 2 ein. Der innere Teil 2b ist mit einem umlaufenden Ring 31 ausgebildet. Mittels hier dreier Verbindungselemente 2c des Aktuators 2 ist der innere Teil 2b mit dem radial äußeren Teil 2a des Aktuators 2 starr verbunden. Der äußere Teil 2a des Aktuators 2 ist ebenfalls mit einem umlaufenden Ring 9 ausgebildet.

Die Verbindungselemente 2c durchgreifen dabei an hier drei Durchgriffstellen 37 eine Längswand 38 (gestrichelt dargestellt) des Gehäuses 3. Entsprechend liegt der äußere Teil 2a des Aktuators 2 außerhalb des Gehäuses 3. Am äußeren Teil 2a sind hier fünf Laschen 10 angeordnet, mit denen eine Felgenabdeckung angelenkt werden kann (siehe z.B. Fig. 6 hierzu). An den Durchgriffstellen 37 liegen die Verbindungselemente 2c in Umfangsrichtung des Gehäuses 3 seitlich am Gehäuse 3 an, sodass der Aktuator 2 bezüglich der Längsachse LA drehfest ist. Jedoch kann der Aktuator 2 durch Drehung der Spindel 26 um die Längsachse LA in Längsrichtung LR verfahren werden, also parallel zur Längsachse LA.

Im radialen Bereich zwischen dem inneren Teil 2b des Aktuators 2 und der Längswand 38 des Gehäuses 3 sind die Speicherelemente 21 des Speichersystems 20 für elektrische Energie angeordnet. In der gezeigten Bauform sind drei Gruppen 39a, 39b, 39c von Speicherelementen 21 vorgesehen, jeweils umfassend zwei Speicherelemente 21. Alle Speicherelemente 21 sind hier auf einem einheitlichen Radius RS (gemessen von der Längsachse LA jeweils zur Mitte eines Speicherelements 21) angeordnet. Die Gruppen 39a-39c sind in Umfangsrichtung UR gleichmäßig verteilt angeordnet. Die Speicherelemente 21 einer Gruppe 39a-39c stehen im Umfangsrichtung UR eng benachbart zueinander, jedoch liegt in Umfangsrichtung UR ein deutlicher Zwischenraum 40 zwischen jeweils benachbarten Gruppen 39a, 39b, 39c. Entsprechend sind die Speicherelemente 21, hier gemäß der Gruppensortierung, teilweise in Umfangsrichtung UR zueinander mit den Zwischenräumen 40 beabstandet. Durch einen jeweiligen Zwischenraum 40 ragt in radialer Richtung ein Verbindungselement 2c.

An einer jeweiligen Durchgriffstelle 37 weist die Längswand 38 einen radial inneren Wandteil 38a (der in Fig. 5 oben angeordnet ist) und einen radial äußeren Wandteil 38b auf. Die beiden entlang der Längsachse LA verlaufenden Wandteile 38a, 38b sind in radialer Richtung, auch genannt Querrichtung QR, durch einen Spalt 41 voneinander beabstandet. Zudem sind die Wandteile 38a, 38b entlang der Längsrichtung LR zueinander versetzt, hier ohne Überlappung in Längsrichtung (alternativ können auch die Wandteile 38a. 38b teilweise zueinander versetzt sein, also mit einer teilweisen Überlappung in Längsrichtung LR angeordnet sein, nicht näher dargestellt). Das freie Enden FI des inneren Wandteils 38a ("inneres freies Ende" FI) und das freie Ende FA des äußeren Wandteils 38b ("äußeres freies Ende" FA) liegen einander gegenüber.

In dem Spalt 41 zwischen den Wandteilen 38a, 38b liegt ein Mittelabschnitt 2d des Aktuators 2, der parallel zu den Wandabschnitten 38a, 38b ausgerichtet ist und mit den freien Enden FI, FA überlappt (in der gezeigten Verfahrposition des Aktuators 2, und auch in allen anderen möglichen Verfahrpositionen). Mit einem inneren Kragen 2e übergereift der Aktuator 2 in Querrichtung QR das innere freie Ende FI, und mit einem äußeren Kragen 2f übergreift der Aktuator 2 in Querrichtung QR das äußere freie Ende FA. Der innere Kragen 2e geht in das übrige Verbindungselement 2c, das bis zum inneren Teil 2b reicht, über. Der äußere Kragen 2f geht in den äußeren Teil 2a des Aktuators 2 über, der hier einen umlaufenden Ring 9 umfasst. Der innere Kragen 2e und der äußere Kragen 2f begrenzen, zusammen mit den freien Enden FA, FI als Anschläge, den Verfahrweg des Aktuators 2 in Längsrichtung LR; falls gewünscht können jedoch zur Begrenzung des Verfahrwegs auch separate Anschläge 42 für den Aktuator 2 vorgesehen sein.

Durch den Mittelteil 2d und die beiden Kragenteile 2e, 2f wird die Durchtrittstelle 37 weitgehend blockiert, so dass das Innere des Gehäuses 3 vor Verschmutzungen geschützt ist.

Die **Fig. 6** und die **Fig. 7** illustrieren im schematischen Längsschnitt entlang der Längsachse LA ein beispielhaftes elektromechanisches System 1, ähnlich wie in den Figuren 1 bis 5 vorgestellt, im eingebauten Zustand in einer Radnabe 43 für ein Fahrzeugrad 44.

Die Radnabe 43 ist in nicht näher dargestellter Weise mit einer Fahrzeugwelle starr verbunden, über die Antriebskraft auf das Fahrzeugrad 44 übertragen wird. Die Radnabe 43 dreht sich also während der Fahrt, und mit ihr das elektromechanische System 1.

Die Radnabe 43 bildet einen näherungsweise zylindrischen, zentralen Hohlraum 43a aus. Das elektromechanische System 1 ist mit dem Außengewinde 5 seines Gehäuses 3 in ein Innengewinde 45 eingeschraubt, welches die Radnabe 43 an der seitlichen Wand des Hohlraums 43a ausbildet, und im eingeschraubten Zustand in nicht näher dargestellter Weise fixiert, insbesondere auch drehfest fixiert.

Auf der Radnabe 43 ist eine Felge 46 des Fahrzeugrades 44 fixiert. Die Fixierung erfolgt durch an der Radnabe 43 feste Schraubbolzen 48, die die Felge 46 durchragen, wobei an den Enden der Schraubbolzen 48 jeweils Überwurfmuttern 48a festgeschraubt sind (in den Figuren 6 und 7 ist die Felge 46 ein wenig abgehoben von der Radnabe 43 dargestellt, um sie besser von der Radnabe 43 zu unterscheiden; in der Praxis ist jedoch die Felge 46 mit den Überwurfmuttern 48a auf der Radnabe 43 verspannt). Auf der Felge 46 ist ein Reifen 47 angeordnet.

Am Gehäuse 3 des elektromechanischen Systems 1 ist der äußere Teil 2a des Aktuators 2 entlang der Längsrichtung LR verfahrbar (vgl. hierzu z.B. Fig. 5). An den Laschen 10 des Aktuators 2 ist eine Felgenabdeckung 49 angekoppelt. Die Felgenabdeckung 49 ist hier mehrteilig ausgebildet, und umfasst hier mehrere Schwenkklappen 49a, 49b. Jeweils ein radial inneres Ende der Schwenkklappe 49a, 49b ist gelenkig mit einer Lasche 10 verbunden. Zudem ist jede Schwencklappe 49a, 49b mit einem Schwenkhalter 50 gehalten und um diesen um eine lokale Schwenkachse schwenkbar, die senkrecht zur Längsachse LA liegt. Der Schwenkhalter 50 ist starr an der Felge 46 befestigt.

Fig. 6 zeigt die Felgenabdeckung 49 in einer geschlossenen Position; zu dieser gehört eine in Längsrichtung LR nach oben (zum hinteren Ende 6 des elektromechanischen Systems 1 hin) verfahrene Position des Aktuators 2. Die Schwencklappen 49a, 49b sind (mit ihren radial äußeren Enden) auf die Felge 46 zu heruntergeklappt. In dieser Stellung hat das Fahrzeugrad 44 während der Fahrt besonders niedrigen Luftwiderstand. Allerdings gelangt auch nur wenig kühlender Fahrtwind zur Felge 46 und durch Öffnungen in der Felge 46 (Öffnungen nicht näher dargestellt) unter die Felge 46.

Fig. 7 zeigt die Felgenabdeckung 49 in einer geöffneten Position; zu dieser gehört eine in Längsrichtung LR nach unten (zum vorderen Ende 4 des elektromechanischen Systems 1 hin) verfahrene Position des Aktuators 2. Die Schwencklappen 49a, 49b sind (mit ihren radial äußeren Enden) von der Felge 46 weggeklappt. In dieser Stellung gelangt besonders viel kühlender Fahrtwind zur Felge 46. Allerdings ist der Luftwiderstand des Fahrzeugrades 44 dafür erhöht.

Man beachte, dass durch Bremsen während der Fahrt die Radnabe 43 von (in Fig. 6 und Fig. 7) unten her heiß wird, und diese Erwärmung an das elektromechanische System 1 zu einem erheblichen Teil weitergibt. Wärme wird axial von unten in das vordere Ende 4 des elektromechanischen Systems 1 eingebracht, aber auch von radial außen in einen dem vorderen Ende 4 nahen Teil des elektromechanischen Systems 1, vor allem wo das elektromechanische System 1 in axialer Richtung mit der Radnabe 43 überlappt. Durch den inneren Aufbau des elektromechanischen Systems 1 werden jedoch der besonders empfindliche Motor und auch die Hauptplatine (siehe z.B. Fig. 2) vor einem Wärmeeintrag von radial außen (und auch von unten) gut geschützt, so dass eine hohe Betriebsbereitschaft erreicht wird.

**Fig. 8** zeigt nochmals in einer Perspektivansicht, fast entlang der Längsachse, eine Felgenabdeckung 49 mit hier fünf Schwenkklappen 49a-49e, die mittels des elektromechanischen Systems 1 in der zuvor dargestellten Weise auf die Felge 46 zu und von dieser weg verschwenkt werden können.

Die **Fig. 9** zeigt eine schematische Aufsicht auf eine Hauptplatine 22 für ein erfindungsgemäßes elektromechanisches System.

Die Hauptplatine 22 umfasst hier einen Hauptprozessor 51, auf dem diverse elektronische Funktionen ganz oder teilweise eingerichtet sind, insbesondere Ansteuerungsfunktionen für weitere Bauteile auf der Hauptplatine 22 und Komponenten des elektromechanischen Systems außerhalb der Hauptplatine 22. Insbesondere kann mit dem Hauptprozessor 51 der Motor angesteuert werden, mit dem der Aktuator betätigt wird, um die Felgenabdeckung zu betätigen. Zudem wird hier mit dem Hauptprozessor 51 das Laden und Entladen des Speichersystems überwacht und gesteuert, und der Generator wird überwacht und gesteuert.

Auf der Hauptplatine 22 ist hier ein Sensorsystem 52 (auch genannt Sensoreinheit) eingerichtet. Dieses umfasst hier einen 6D-Bewegungssensor 53, mit welchem lineare Bewegungen bezüglich dreier orthogonaler, lokaler Bewegungsachsen und Winkelbewegungen bezüglich dreier orthogonaler, lokaler Drehachsen bestimmt werden können; die drei lokalen Bewegungsachsen und die drei lokalen Drehachsen sind hier zueinander gleich gewählt. Der 6D-Bewegungssensor 53 ist dafür mit einer Kombination von Beschleunigungssensor und Gyroskop ausgebildet. Zudem umfasst das Sensorsystem 52 hier auch ein Magnetometer 54, mit welchem eine Magnetfeldstärke des Erdmagnetfelds am Ort des Magnetometers 54 entlang dreier orthogonaler, lokaler Magnetfeldmessrichtungen vermessen werden kann. Die lokalen Magnetfeldmessrichtungen entsprechend hier den lokalen Bewegungsrichtungen und Drehachsen. Die Messdaten des Sensorsystems 52 werden an eine Auswerteeinrichtung 55 weitergegeben, welche hier in den Hauptprozessor 51 integriert ist. Die Auswerteeinrichtung 55 führt hier eine Koordinatentransformation für die vom Sensorsystem 52 erhaltenen Messdaten durch, um sie in das Koordinatensystem des Fahrzeugs umzurechnen (siehe Fig. 10 dazu). Zudem rechnen die Auswerteeinrichtung 55 hier die Messdaten in physikalische Größen (also hier lineare Geschwindigkeit, Winkelgeschwindigkeit und Magnetfeldstärke) um.

Weiterhin ist auf der Hauptplatine 22 ein Temperatursensor 58 ausgebildet. Dessen Messdaten werden ebenfalls an die Auswerteeinrichtung 55 weitergegeben. Die Auswerteeinrichtung 55 erhält zudem auch Messdaten von weiteren Temperatursensoren angeordnet am Generator, am Speichersystem und am Motor (nicht näher dargestellt).

Ebenfalls ist auf der Hauptplatine 22 ein Drucksensor 36 ausgebildet, mit dem der Umgebungsdruck ("Luftdruck") gemessen werden kann. Dessen Messdaten werden ebenfalls an die Auswerteeinrichtung 55 weitergegeben.

Auf der Hauptplatine 22 montiert ist hier auch eine Beleuchtungseinrichtung 8, die über den Hauptprozessor 51 angesteuert wird. Die Beleuchtungseinrichtung 8 umfasst typischerweise mehrere LEDs, die auf der Hauptplatine 22 verteilt angeordnet sind und mit Lichtleitelementen (z.B. Plexiglasstrukturen) verbunden sind, die zur Endkappe des elektromechanischen Systems führen (nicht näher dargestellt, vgl. aber Fig. 1 hierzu).

Um Steuerbefehle vom Fahrzeug zu erhalten, oder auch um Messdaten oder aus den Messdaten ermittelte Informationen an das Fahrzeug weiterzugeben, ist auf der Hauptplatine 22 eine erste Kommunikationseinrichtung 56 ausgebildet. Der elektronische Teil 56a der ersten Kommunikationseinrichtung 56 ist in den Hauptprozessor 51 integriert. Zudem verfügt die erste Kommunikationseinrichtung 56 über eine Antenne 56b. Die erste Kommunikationseinrichtung 56 ist hier für eine Bluetooth Low Energy (BLE) Kommunikation eingerichtet.

Um Messdaten von einem externen Sensor zu erhalten, der beispielsweise im Ventil des Reifens des Fahrzeugrades integriert ist, oder auch um Energie an den externen Sensor zu übertragen, ist eine zweite Kommunikationseinrichtung 57 auf der Hauptplatine 22 eingerichtet. Der elektronische Teil 57a der zweiten Kommunikationseinrichtung 57 ist in den Hauptprozessor 51 integriert. Zudem verfügt die zweite Kommunikationseinrichtung 57 über eine Antenne 57b. Die zweite Kommunikationseinrichtung 57 ist hier für eine Bluetooth oder NFC/RF Kommunikation eingerichtet.

In den Hauptprozessor 51 integriert ist hier weiterhin eine Energiesteuereinrichtung 59. Mit dieser wird insbesondere entschieden, welche Komponenten und Bauteile oder Funktionen von Komponenten und Bauteilen zu einem jeweiligen Zeitpunkt aktiviert, teilaktiviert oder abgeschaltet sind. Dadurch kann die vorhandene elektrische Energie, generiert durch den Generator und/oder gespeichert im Speichersystem, so genutzt werden, dass eine hohe Betriebsbereitschaft der wesentlichen Funktionen des elektromechanischen Systems erreicht wird.

Weiterhin ist auf der Hauptplatine 22 hier ein magnetbetätigter Schalter 60 (auch genannt Magnetschalter) angeordnet, welcher von außen (also von außerhalb des Gehäuses des elektromechanischen Systems) mit einem Magneten betätigt werden kann. Mittels des Magnetschalters kann das elektromechanische System ganz oder teilweise aktiviert und deaktiviert werden.

Das elektromechanische System, und insbesondere der Hauptprozessor 51 der Hauptplatine 22, kann als Datenaggregator für Messdaten der Sensoren 53, 54, 58, 36 oder auch externer Sensoren oder daraus gewonnener Informationen dienen, und diese mittels der ersten Kommunikationseinrichtung 56 an das fahrzeugseitige elektronische System übertragen (siehe dazu auch Fig. 10). Oft umfasst die Hauptplatine 22 auch einen DC-DC-Konverter (nicht näher dargestellt).

In der **Fig. 10** ist schematisch ein Fahrzeug 61 dargestellt, an dessen Radnaben 43 der Fahrzeugräder 44 elektromechanische Systeme 1 gemäß der Erfindung verbaut sind. Das hier beispielhaft illustrierte Fahrzeug 61 hat vier Fahrzeugräder 44; in der Ansicht von Fig. 10 sind davon zwei zu sehen (die anderen zwei Fahrzeugräder an der in Fig. 10 dem Betrachter abgewandten Fahrzeugseite wären im Wesentlichen verdeckt und sind daher nicht näher dargestellt). Im vorgestellten Beispiel ist allen vier Fahrzeugrädern 44 des Fahrzeugs 61 jeweils ein elektromechanisches System 1 verbaut; es ist allgemein bevorzugt, alle Fahrzeugräder 44 eines Fahrzeugs 61 mit elektromechanischen Systemen 1 gemäß der Erfindung auszustatten. Man beachte, dass in anderen Verwendungen nur ein Teil der Fahrzeugräder eines Fahrzeugs mit elektromechanischen Systemen versehen sein können, typischerweise wobei die Fahrzeugräder nur eines Teils der Achsen des Fahrzeugs mit elektromechanischen Systemen versehen werden, bevorzugt darunter zumindest die gelenkte Achse (nicht näher dargestellt).

Dem Fahrzeug 61 können Fahrzeugachsen x, y, z zugewiesen werden, hier eingezeichnet an einem der Räder 44. Die x-Achse entspricht der (horizontalen) Vorwärtsfahrtrichtung des Fahrzeugs 61; als Drehachse entspricht dies der Rollachse eines Fahrzeugrades 44. Die y-Achse entspricht der horizontalen Richtung senkrecht zur Vorwärtsfahrtrichtung; als Drehachse entspricht dies der Nickachse. Die z-Achse entspricht der vertikalen Achse senkrecht zur Vorwärtsfahrtrichtung; als Drehachse entspricht dies der Gierachse. Die auf einem elektromechanischen System 1 bzw. auf einem Fahrzeugrad 44 bestimmten Messwerte werden typischerweise durch eine Koordinatentransformation auf die Fahrzeugachsen umgerechnet.

Im illustrierten Beispiel sind entfernt von den elektromechanischen Systemen 1 an den Fahrzeugrädern 44 externe Sensoren 66 angeordnet, die im illustrierten Beispiel als Reifendrucksensoren 67 und Reifentemperatursensoren 68 ausgebildet sind. Diese übertragen mittels einer NFC/RF-Kommunikation Messdaten an die jeweilige zweite Kommunikationseinheit des elektromechanischen Systems 1 (siehe dazu Fig. 9). Zudem wird mit der zweiten Kommunikationseinrichtung hier auch Energie drahtlos an die externen Sensoren 66 übertragen, die dadurch passiv, also ohne eigene Energieversorgung, ausgebildet sein können. In anderen Ausführungsformen können die externen Sensoren 66 auch andere interessierende physikalische Größen nach Bedarf bestimmen, beispielsweise eine Umgebungshelligkeit zur Aktivierung und Deaktivierung einer Beleuchtungseinrichtung als Positionsbeleuchtung (nicht näher dargestellt).

Die elektromechanischen Systeme 1 der Fahrzeugräder 44 kommunizieren mit ihren jeweiligen ersten Kommunikationsvorrichtungen (siehe dazu Fig. 9) mit einem elektronischen System 62 des Fahrzeugs 61 über eine fahrzeugseitige Kommunikationseinrichtung 63; diese ist hier für BLE eingerichtet. Dabei werden Messdaten aus dem jeweiligen Sensorsystem und/oder anderer Sensoren der elektromechanisches Systeme 1 und/oder externer Sensoren oder daraus gewonnene Information an das elektronische System 62 des Fahrzeugs 61 übermittelt. Dadurch kann der momentane Zustand (insbesondere Bewegungszustand) der elektromechanischen Systeme 1 bzw. der Fahrzeugräder 44 an das elektronische System 62 des Fahrzeugs 61 mitgeteilt werden. Diese Messdaten oder Informationen wertet (zumindest teilweise) ein ESP-Steuergerät 64 des elektronischen Systems 62 des Fahrzeugs 61 aus, und leitet aus ihnen Befehle ab, um das Fahrzeug 61 zu steuern. Insbesondere werden Steuerbefehle für die Bremsensteuerung 65 erzeugt und an diese weitergegeben. Die Bremsensteuerung 65 steuert dann die Bremsen des Fahrzeugs 61 an, und realisiert dadurch beispielsweise ein Antiblockiersystem. Ebenso können beispielsweise Fahrwerksabstimmungen angesteuert werden (nicht näher dargestellt).

### Bezugszeichenliste

- 1: elektromechanisches System
- 2: Aktuator
- 2a: äußerer Teil des Aktuators
- 2b: innerer Teil des Aktuators
- 2c: Verbindungselemente des Aktuators
- 2d: Mittelabschnitt des Aktuators
- 2e: innerer Kragen des Aktuators
- 2f: äußerer Kragen des Aktuators
- 3: Gehäuse
- 4: vorderes Ende
- 5: Außengewinde
- 6: hinteres Ende
- 7: Endkappe
- 8: Beleuchtungseinrichtung
- 9: umlaufender Ring (äußerer Teil des Aktuators)
- 10: Lasche
- 11: Generator
- 12: Rotor
- 13: Permanentmagnete
- 14: Unwucht (Unwuchtbauteil)
- 15: Stator
- 16: elektro-magnetische Spulen
- 17: Generatorplatine
- 18: Zwischenplatine
- 19a: Federkontaktstifte (Generatorplatine zu Zwischenplatine)
- 19b: Federkontaktstifte (Speicherelemente zu Zwischenplatine)
- 19c: Federkontaktstifte (Speicherelemente zu Hauptplatine)
- 19d: Federkontaktstifte (Motorplatine zu Hauptplatine)
- 20: Speichersystem
- 21: Speicherelement
- 22: Hauptplatine
- 23: Motor
- 23a: Welle des Motors
- 24: Kopplungseinrichtung
- 25: Getriebe
- 25a: Welle des Getriebes
- 26: Spindel
- 27: Lager für Spindel
- 28: Außengewinde (an der Spindel)
- 29: Motorplatine
- 30: Innengewinde (am inneren Teil des Aktuators)
- 31: umlaufender Ring (innerer Teil des Aktuators)
- 32: starrer Verbindungsstift
- 33: (verschieblicher) Stift
- 33a: verdickter Endabschnitt des Stifts
- 34: Hülle (Hülse)
- 34a: Endanschlag der Hülle
- 35: Feder
- 36: Drucksensor (auf Hauptplatine)
- 37: Durchgriffstelle
- 38: Längswand
- 38a: innerer Wandteil der Längswand
- 38b: äußerer Wandteil der Längswand
- 39a-39c: Gruppen von Speicherelementen
- 40: Zwischenraum (zwischen Gruppen von Speicherelementen)
- 41: Spalt (zwischen innerem Wandteil und äußerem Wandteil)
- 42: separater Anschlag
- 43: Radnabe
- 43a: zentraler Hohlraum (Radnabe)
- 44: Fahrzeugrad
- 45: Innengewinde (Radnabe)
- 46: Felge
- 47: Reifen
- 48: Schraubbolzen
- 48a: Überwurfmutter
- 49: Felgenabdeckung
- 49a-49e: Schwenkklappen (der Felgenabdeckung)
- 50: Schwenkhalter
- 51: Hauptprozessor
- 52: Sensorsystem
- 53: 6D-Bewegungssensor
- 54: Magnetometer
- 55: Auswerteeinrichtung
- 56: erste Kommunikationseinrichtung
- 56a: Elektronischer Teil (erste Kommunikationseinrichtung)
- 56b: Antenne (erste Kommunikationseinrichtung)
- 57: zweite Kommunikationseinrichtung
- 57a: Elektronischer Teil (zweite Kommunikationseinrichtung)
- 57b: Antenne (zweite Kommunikationseinrichtung)
- 58: Temperatursensor
- 59: Energiesteuereinrichtung
- 60: magnetbetätigter Schalter
- 61: Fahrzeug
- 62: elektronisches System des Fahrzeugs
- 63: fahrzeugseitige Kommunikationseinrichtung
- 64: ESP-Steuergerät
- 65: Bremsensteuerung
- 66: externer Sensor
- 67: Reifendrucksensor
- 68: Reifentemperatursensor
- FA: (äußeres) freies Ende des äußeren Wandteils
- FI: (inneres) freies Ende des inneren Wandteils
- LA: Längsachse
- LR: Längsrichtung (parallel Längsachse)
- Ix, ly, Iz: lokale Bewegungsachsen/Drehachsen/Magnetfeldmessrichtungen
- QR: Querrichtung (senkrecht zur Längsachse)
- RS: einheitlicher Radius der Speicherelemente
- UR: Umfangsrichtung
- VR: Verschieberichtung
- x, y, z: Fahrzeugachsen

## Patentansprüche

1. Elektromechanisches System (1), zur ortsfesten Anordnung in einem zentralen Hohlraum (43a) einer Radnabe (43) eines Fahrzeugs (61),
wobei das elektromechanische System (1) umfasst
- einen Generator (11) zur Erzeugung von elektrischem Strom,
- einen elektrischen Motor (23) zur Betätigung eines Aktuators (2),
- den Aktuator (2), und
- ein Speichersystem (20) zur Speicherung von elektrischer Energie,
**dadurch gekennzeichnet,**
**dass** der Aktuator (2) entlang einer Längsachse (LA) des elektromechanischen Systems (1) linear verfahrbar ist,
**dass** eine Kopplungseinrichtung (24) den Motor (23) an einen radial inneren Teil (2b) des Aktuators (2) koppelt,
**dass** das Speichersystem (20) mehrere Speicherelemente (21) aufweist, welche radial außen um die Längsachse (LA) und um den Motor (23) herum angeordnet sind und zumindest teilweise in einer Umfangsrichtung (UR) voneinander beabstandet sind,
und **dass** ein radial äußerer Teil (2a) des Aktuators (2) radial jenseits der Speicherelemente (21) ausgebildet ist,
wobei Verbindungselemente (2c) des Aktuators (2) den radial inneren Teil (2b) und den radial äußeren Teil (2a) miteinander starr verbinden und zwischen den Speicherelementen (21) hindurchgreifen.

2. Elektromechanisches System (1) nach Anspruch 1, **dadurch gekennzeichnet,**
**dass** die Kopplungseinrichtung (24) eine Spindel (26) umfasst, welche um die Längsachse (LA) drehbar gelagert ist und welche vom Motor (23) antreibbar ist,
**dass** die Spindel (26) ein Außengewinde (28) aufweist,
**dass** der Aktuator (2) an seinem radial inneren Teil (2b) ein Innengewinde (30) aufweist, welches auf das Außengewinde (28) der Spindel (26) aufgeschraubt ist,
und **dass** der Aktuator (2) drehfest bezüglich der Längsachse (LA) gelagert ist.

3. Elektromechanisches System (1) nach einem der vorhergehenden Ansprüche, **dadurch gekennzeichnet, dass** am radial äußeren Teil (2a) des Aktuators (2) eine Felgenabdeckung (49) für ein an der Radnabe (43) montiertes Fahrzeugrad (44) angekoppelt ist.

4. Elektromechanisches System (1) nach einem der vorhergehenden Ansprüche, **dadurch gekennzeichnet,**
**dass** das elektromechanische System (1) ein vorderes Ende (4) aufweist, mit welchem voraus das elektromechanische System (1) in den Hohlraum (43a) der Radnabe (43) einführbar ist, und ein entlang der Längsachse (LA) gegenüberliegendes, hinteres Ende (6) aufweist,
und **dass** entlang der Längsachse (LA) vom vorderen Ende (4) zum hinteren Ende (6) eine Abfolge von Komponenten des elektromechanischen Systems (1) eingerichtet ist, wie folgt:
Generator (11), Kopplungseinrichtung (24), Motor (23).

5. Elektromechanisches System (1) nach Anspruch 4, **dadurch gekennzeichnet, dass** das elektromechanische System (1) zudem auch eine Zwischenplatine (18) und eine Hauptplatine (22) aufweist,
und dass entlang der Längsachse (LA) vom vorderen Ende (4) zum hinteren Ende (6) die Abfolge der Komponenten des elektromechanischen Systems (1) eingerichtet ist, wie folgt:
Generator (11), Zwischenplatine (18), Kopplungseinrichtung (24), Motor (23), Hauptplatine (22).

6. Elektromechanisches System (1) nach einem der vorhergehenden Ansprüche, **dadurch gekennzeichnet,**
**dass** das elektromechanische System (1) ein Sensorsystem (52) umfasst,
wobei das Sensorsystem (52) eingerichtet ist zur Messung
- von linearen Bewegungen des elektromechanischen Systems (1) bezüglich zumindest einer ersten lokalen Bewegungsachse (Ix) und einer zweiten lokalen Bewegungsachse (ly), welche linear unabhängig sind,
- als auch von Winkelbewegungen des elektromechanischen Systems (1) bezüglich zumindest einer ersten lokalen Drehachse (Ix) und einer zweiten lokalen Drehachse (ly), die linear unabhängig voneinander sind.

7. Elektromechanisches System (1) nach Anspruch 6, **dadurch gekennzeichnet, dass** das Sensorsystem (52) weiterhin eingerichtet ist zur Messung
- einer Magnetfeldstärke an einem Messort im elektromechanischen System (1) bezüglich zumindest einer ersten lokalen Magnetfeldmessrichtung (Ix) und einer zweiten lokalen Magnetfeldmessrichtung (ly), die linear unabhängig sind.

8. Elektromechanisches System (1) nach einem der Ansprüche 6 oder 7,
**dadurch gekennzeichnet,**
**dass** eine lokale Bewegungsachse (ly) und eine lokale Drehachse (ly) als die Längsachse (LA) des elektromechanischen Systems (1) gewählt sind, welche auch einer Rotationsachse der Radnabe (43) im montierten Zustand des elektromechanischen Systems (1) entspricht,
insbesondere wobei auch eine lokale Magnetfeldmessachse (ly) als die Längsachse (LA) des elektromechanischen Systems (1) gewählt ist.

9. Elektromechanisches System (1) nach einem der vorhergehenden Ansprüche, **dadurch gekennzeichnet,**
**dass** der Generator (11) einen im elektromechanischen System (1) festen Stator (15) und einen gegenüber dem Stator (15) drehbeweglichen Rotor (12) umfasst, wobei der Rotor (12) mit einer Unwucht (14) ausgebildet ist.

10. Elektromechanisches System (1) nach Anspruch 9, **dadurch gekennzeichnet, dass** der Rotor (12) innerhalb des Stators (15) drehbar gelagert ist, dass am Rotor (12) ein oder mehrere Permanentmagnete (13) ausgebildet sind,
und dass am Stator (15) ein oder mehrere elektro-magnetische Spulen (16) ausgebildet sind.

11. Elektromechanisches System (1) nach einem der vorhergehenden Ansprüche, **dadurch gekennzeichnet,**
**dass** das elektromechanische System (1) mehrere Federkontaktstifte (19a-19d) zur Einrichtung von elektrischen Verbindungen umfasst.

12. Elektromechanisches System (1) nach einem der vorhergehenden Ansprüche, **dadurch gekennzeichnet,**
**dass** das elektromechanische System (1) eine erste Kommunikationseinrichtung (56) eingerichtet für eine drahtlose Kommunikation zu einem elektronischen System (62) des Fahrzeugs (61) aufweist,
insbesondere wobei die erste Kommunikationseinrichtung (56) für eine drahtlose Kommunikation mittels BLE(=Bluetooth Low Energy)-Standard eingerichtet ist.

13. Elektromechanisches System (1) nach einem der vorhergehenden Ansprüche, **dadurch gekennzeichnet,**
**dass** das elektromechanische System (1) eine zweite Kommunikationseinrichtung (57) eingerichtet für eine drahtlose Kommunikation zu einem oder mehreren externen Sensoren (66) aufweist,
insbesondere wobei die zweite Kommunikationseinrichtung (57) für eine drahtlose Kommunikation mittels einer RF-Verbindung oder NFC-Verbindung ausgebildet ist,
und insbesondere wobei die zweite Kommunikationseinrichtung (57) auch für eine drahtlose Energieübertragung zu dem einen oder den mehreren externen Sensoren (66) als passive externe Sensoren (66) eingerichtet ist.

14. Elektromechanisches System (1) nach einem der vorhergehenden Ansprüche, **dadurch gekennzeichnet,**
**dass** das elektromechanische System (1) eine Auswerteeinrichtung (55) zur Auswertung von Messdaten von Sensoren (53, 54, 58, 36) des elektromechanischen Systems (1) und/oder von externen Sensoren (66) aufweist.

15. Elektromechanisches System (1) nach einem der vorhergehenden Ansprüche, **dadurch gekennzeichnet, dass** das elektromechanische System (1) wenigstens einen Sensor zur Erfassung einer physikalischen Messgröße aufweist,
insbesondere wenigstens einen Temperatursensor (58) und/oder wenigstens einen Drucksensor (36) zur Messung eines Drucks in der Umgebung des elektromechanischen Systems (1).

16. Elektromechanisches System (1) nach einem der vorhergehenden Ansprüche, **dadurch gekennzeichnet,**
**dass** das elektromechanische System (1) wenigstens eine Beleuchtungseinrichtung (8) umfasst, welche mittels des Generators (11) und/oder des Speichersystems (20) mit elektrischer Energie versorgt wird,
insbesondere wobei die wenigstens eine Beleuchtungseinrichtung (8) eine oder mehrere der folgenden Funktionalitäten aufweist:
Fahrtrichtungsanzeiger, Warnbeleuchtung, Notfallbeleuchtung, Positionsbeleuchtung, Zierbeleuchtung.

17. Elektromechanisches System (1) nach einem der vorhergehenden Ansprüche, **dadurch gekennzeichnet,**
**dass** das elektromechanische System (1) wenigstens einen magnetbetätigten Schalter (60) aufweist, mit welchem das elektromechanische System (1) ganz und/oder teilweise von außerhalb eines Gehäuses (3) des elektromechanischen Systems (1) aktiviert und deaktiviert werden kann.

18. Elektromechanisches System (1) nach einem der vorhergehenden Ansprüche, **dadurch gekennzeichnet,**
**dass** das elektromechanische System (1) eine Energiesteuereinrichtung (59) zur Steuerung eines Verbrauchs von elektrischer Energie aufweist, mit der Komponenten und/oder Funktionen von Komponenten des elektromechanischen Systems (1) aktiviert und deaktiviert werden können.

19. Elektromechanisches System (1) nach einem der vorhergehenden Ansprüche, **dadurch gekennzeichnet,**
**dass** das elektromechanische System (1) ein Gehäuse (3) aufweist, welches eine zumindest im Wesentlichen entlang der Längsachse (LA) verlaufende Längswand (38) aufweist, in welchem wenigstens eine Durchgriffstelle (37) für den Aktuator (2) eingerichtet ist,
**dass** im Bereich einer jeweiligen Durchgriffstelle (37) in der Längswand (38) ein äußerer Wandteil (38b) und ein innerer Wandteil (38a) eingerichtet sind, die
- parallel zur Längsachse (LA) verlaufen,
- aber in Querrichtung (QR) senkrecht zur Längsachse (LA) voneinander beabstandet sind,
- entlang der Längsachse (LA) zumindest teilweise gegeneinander versetzt sind, so dass ein inneres freies Ende (FI) des inneren Wandteils (38a) und ein äußeres freies Ende (FA) des äußeren Wandteils (38b) im Bereich der Durchgriffstelle (37) einander gegenüberliegen,
und **dass** der Aktuator (2) an einer jeweiligen Durchgriffstelle (37) aufweist:
- einen Mittelabschnitt (2d), der entlang der Längsachse (LA) verläuft und in Querrichtung (QR) zwischen dem inneren Wandteil (8a) und dem äußeren Wandteil (38b) angeordnet ist,
- einen inneren Kragen (2e), der an einem Ende des Mittelabschnitts (2d), welcher dem inneren freien Ende (FI) abgewandt ist, ausgebildet ist und in Querrichtung (QR) über das innere freie Ende (FI) nach innen ausgreift,
und
- einen äußeren Kragen (2f), der an einem Ende des Mittelabschnitts (2d), welcher dem äußeren freien Ende (FA) abgewandt ist, ausgebildet ist und in Querrichtung (QR) über das äußere freie Ende (FA) nach außen ausgreift.

20. Verwendung von wenigstens zwei elektromechanischen Systemen (1) nach einem der vorhergehenden Ansprüche,
wobei die wenigstens zwei elektromechanischen Systeme (1) in den zentralen Hohlräumen (43a) von Radnaben (43) wenigstens zweier Fahrzeugräder (44), insbesondere gelenkter Fahrzeugräder (44), eines Fahrzeugs (61) ortsfest angeordnet sind,
wobei ein jeweiliges elektromechanische System (1) mittels einer oder mehrerer Sensoren (53, 54, 58, 36) des elektromechanischen Systems (1) Messdaten zu einem derzeitigen Zustand des Fahrzeugrades (44) erfasst,
wobei mittels einer ersten Kommunikationseinrichtung (56) des elektromechanischen Systems (1) diese Messdaten oder aus diesen Messdaten gewonnene Informationen drahtlos an ein elektronisches System (62) des Fahrzeugs (61) weitergeleitet werden,
und wobei das elektronische System (62) des Fahrzeugs (61) die weitergeleiteten Messdaten oder Informationen bei einer Einstellung von Fahrzeugeigenschaften und/oder bei der Steuerung des Fahrzeugs (61) berücksichtigt.
